(19) Europäisches Patentamt / European Patent Office / Office européen des brevets

(11) **EP 3 676 221 B1**

(12) **FASCICULE DE BREVET EUROPEEN**

(45) Date de publication et mention de la délivrance du brevet:
**10.04.2024 Bulletin 2024/15**

(21) Numéro de dépôt: **18785419.5**

(22) Date de dépôt: **23.08.2018**

(51) Classification Internationale des Brevets (IPC):
**C01B 32/158** (2017.01)   **H01M 4/133** (2010.01)
**H01G 11/86** (2013.01)   **H01G 11/36** (2013.01)
**H01G 11/28** (2013.01)   **C01B 32/16** (2017.01)
**H01G 11/38** (2013.01)   **H01G 11/60** (2013.01)
**H01G 11/62** (2013.01)

(52) Classification Coopérative des Brevets (CPC):
**C01B 32/158; C01B 32/16; H01G 11/28;**
**H01G 11/36; H01G 11/38; H01G 11/86;**
**H01M 4/587;** C01B 2202/08; C01B 2202/34;
H01G 11/60; H01G 11/62; H01M 4/133;
H01M 4/1393; H01M 4/366; Y02E 60/10;   (Cont.)

(86) Numéro de dépôt international:
**PCT/FR2018/052095**

(87) Numéro de publication internationale:
**WO 2019/043320 (07.03.2019 Gazette 2019/10)**

(54) **PROCEDE DE FABRICATION DE NANOTUBES DE CARBONE VERTICALEMENT ALIGNES, ET CONDENSATEURS ELECTROCHIMIQUES UTILISANT CES NANOTUBES COMME ELECTRODES**

VERFAHREN ZUR HERSTELLUNG VON VERTIKAL AUSGERICHTETEN KOHLENSTOFF-NANORÖHREN UND DIESE NANORÖHREN ALS ELEKTRODEN VERWENDENDE ELEKTROCHEMISCHE KONDENSATOREN

METHOD FOR MANUFACTURING VERTICALLY ALIGNED CARBON NANOTUBES, AND ELECTROCHEMICAL CAPACITORS USING THESE NANOTUBES AS ELECTRODES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.08.2017 FR 1757948**
**16.10.2017 FR 1759663**

(43) Date de publication de la demande:
**08.07.2020 Bulletin 2020/28**

(73) Titulaires:
• **Nawatechnologies**
**13100 Aix-En-Provence (FR)**
• **Commissariat à l'Energie Atomique et aux Energies Alternatives**
**75015 Paris (FR)**

• **Université de Tours**
**37020 Tours Cedex 1 (FR)**

(72) Inventeurs:
• **DESCARPENTRIES, Jérémie**
**91190 Gif Sur Yvette (FR)**
• **DESGRANGES, Cédric**
**37000 Tours (FR)**
• **BOISSET, Aurélien**
**13120 Gardanne (FR)**
• **MAYNE, Martine**
**91470 Les Molieres (FR)**
• **PINAULT, Mathieu**
**94260 Fresnes (FR)**
• **TRAN VAN, François**
**37230 Fondettes (FR)**
• **GHAMOUSS, Fouad**
**37300 Joues-les-tours (FR)**

(74) Mandataire: **Schmidt, Martin Peter**
**IXAS Conseil**
**22 avenue René Cassin**
**69009 Lyon (FR)**

(56) Documents cités:
- **JO S H ET AL: "Correlation of field emission and surface microstructure of vertically aligned carbon nanotubes", APPLIED PHYSICS LETTERS, A I P PUBLISHING LLC, US, vol. 84, no. 3, 19 janvier 2004 (2004-01-19), pages 413-415, XP012061875, ISSN: 0003-6951, DOI: 10.1063/1.1642272**
- **DAI LEI ET AL: "Large-scale production and metrology of vertically aligned carbon nanotube films", JOURNAL OF VACUUM SCIENCE AND TECHNOLOGY: PART A, AVS /AIP, MELVILLE, NY., US, vol. 27, no. 4, 30 juin 2009 (2009-06-30), pages 1071-1075, XP012128918, ISSN: 0734-2101, DOI: 10.1116/1.3148827**
- **GOISLARD DE MONSABERT T ET AL: "Vertically aligned carbon nanotubes black coatings from roll-to-roll deposition process", PROCEEDINGS OF SPIE - THE INTERNATIONAL SOCIETY FOR OPTICAL ENGINEERING - INTERNATIONAL CONFERENCE ON SPACE OPTICS, ICSO 2016 20170925 SPIE USA, vol. 10562, 18 octobre 2016 (2016-10-18), XP060093690, DOI: 10.1117/12.2296243**
- **SEMAN R. N. A. R. ET AL: "Highly efficient growth of vertically aligned carbon nanotubes on Fe-Ni based metal alloy foils for supercapacitors", ADVANCES IN NATURAL SCIENCES: NANOSCIENCE & NANOTECHNOLOGY, vol. 7, no. 4, 4 novembre 2016 (2016-11-04), XP002783055, ISSN: 2043-6254, DOI: 10.1088/2043-6262/7/4/045016**
- **ANNA SZABÓ ET AL: "Influence of synthesis parameters on CCVD growth of vertically aligned carbon nanotubes over aluminum substrate", SCIENTIFIC REPORTS, vol. 7, no. 1, 25 août 2017 (2017-08-25), XP055492526, DOI: 10.1038/s41598-017-10055-0**
- **CASTRO C ET AL: "The role of hydrogen in the aerosol-assisted chemical vapor deposition process in producing thin and densely packed vertically aligned carbon nanotubes", CARBON SEPTEMBER 2013 ELSEVIER LTD GBR,, vol. 61, 1 septembre 2013 (2013-09-01), pages 585-594, XP002726822, DOI: 10.1016/J.CARBON.2013.05.040**

(52) Classification Coopérative des Brevets (CPC):
(Cont.)
Y02E 60/13

**Description**

**Domaine technique de l'invention**

L'invention concerne les condensateurs électriques, et plus particulièrement celui des condensateurs électrochimiques à double couche, ainsi que les procédés de fabrication de tels condensateurs. Plus particulièrement, ces condensateurs sont des supercondensateurs. L'invention concerne également les procédés de dépôt de nanotubes en carbone verticalement alignés (VACNT) sur un substrat, qui peuvent être utilisés dans la fabrication de condensateurs électrochimiques à double couche. Plus particulièrement, l'invention concerne les procédés de dépôt chimique par phase vapeur (CVD) de tapis de VACNT sur un substrat métallique.

**Etat de la technique**

Les (super)condensateurs électrochimiques à double couche sont connus depuis longtemps. Ils comprennent une électrode négative et une électrode positive, séparées par un séparateur et baignant dans un électrolyte. Ils sont basés sur un mécanisme capacitif : les charges sont adsorbées sur chaque électrode en créant une double couche électrochimique.

On cherche à diminuer la résistance série de ces dispositifs, qui conduit à chaque charge et à chaque décharge à la transformation d'énergie électrique en chaleur ; chaque interface solide / solide et solide / liquide contribue à la résistance série. Ainsi, les électrodes doivent présenter une grande surface de contact et une bonne conductivité électrique intrinsèque. Ces supercondensateurs utilisent souvent des électrodes en carbone, sous des formes différentes. De nombreux travaux ont été menés pour optimiser la nature des matériaux carbonés formant les électrodes.

A titre d'exemple, WO 03/038846 (Maxwell Technologies) décrit un condensateur électrochimique à double couche comprenant des électrodes fabriquées à partir de poudre de carbone, à savoir une première couche de poudre de noir de carbone conducteur, en contact avec le collecteur métallique, et une seconde couche de charbon actif, en contact avec l'électrolyte liquide contenu dans un séparateur poreux. Ces poudres contiennent en règle générale des liants organiques. WO 2007/062126 et US 2009/0290288 (Maxwell Technologies) décrivent des électrodes comprenant un mélange de carbone conducteur, charbon actif et liant organique.

On envisage maintenant d'utiliser des matériaux à base de carbone nanostructurés, et une discussion détaillée est donnée dans l'article « Review of nanostructured carbon material for electrochemcial capacitor applications : advantages and limitations of activated carbon, carbide-derived carbon, zeolite-templated carbon, carbon aerogels, carbon nanotubes, oinon-like carbon, and graphene » par W. Gu and G. Yushin, WIRE Energy Environ 2013, doi : 10.1002/wene.102. Parmi les matériaux carbonés nanostructurés envisagés comme électrode des supercondensateurs figurent les nanotubes de carbone (NTC), et en particulier les nanotubes en carbone verticalement alignés (VACNT), connus en tant que tels. Le dépôt de VACNT sur un substrat en alliage Fe-Ni a été décrit par R. Seman et al., « Highly efficient growth of vertically aligned carbon nanotubes on Fe-Ni base métal alloys foils for supercapacitors », Adv. Nat. Sci. : Nanosci. Nanotechnol. 7 (2016) (doi : 10.1088/2043-6262/7/4/045016).

Les supercondensateurs qui existent sur le marché possèdent généralement une grande durée de vie (plusieurs millions de cycles) et des densités de puissance élevées. Leur problème majeur réside dans la faible quantité d'énergie stockée. Les NTC possèdent généralement des surfaces spécifiques bien moins importantes que le carbone activé ; pour cette raison les prototypes de supercondensateurs à base de NTC (et même à base de nanotubes de carbone verticalement alignés (VACNT)) ne permettent pas de stocker, par unité de surface, une quantité suffisante d'énergie pour avoir un intérêt industriel.

Les NTC alignés étant trop peu capacitifs pour assurer à eux seuls des propriétés de stockage conséquentes, il a été imaginé de les recouvrir de matériaux de type polymères conducteurs ; cela est décrit dans WO 2012/004317. En effet, un autre concept de supercondensateurs fait intervenir des effets dits pseudocapacitifs liés notamment à des réactions redox, à l'intercalation et à l'électrosorption. Ainsi, des supercondensateurs utilisant des électrodes en polymères présentant une conductivité électronique et capables de montrer un comportement rédox ont été décrits dans la littérature. Il a été imaginé d'utiliser ces polymères sous la forme d'un revêtement sur un substrat de carbone conducteur à haute surface spécifique. Cela est décrit par exemple dans la publication « Carbon Redox-Polymer-Gel Hybrid Super-capacitors » par Vlad et al., parue dans Sci. Rep. 6, 22194; doi: 10.1038/srep22194 (2016).

En particulier, les nanotubes de carbone verticalement alignés (VACNT - « Vertically Aligned Carbon Nano-Tubes), dont la préparation est décrite par exemple dans WO 2015/071408 (Commissariat à l'Energie Atomique et aux Energies Alternatives), représentent un substrat propice pour de tels revêtements ; cela est décrit dans le document EP 2 591 151 (Commissariat à l'Energie Atomique et aux Energies Alternatives), dans la thèse de doctorat « Nanocomposites polythiophènes / nanotubes de carbone alignés : Elaboration, caractérisations et applications aux supercondensateurs en milieu liquide ionique » de Sébastien Lagoutte (Université de Cergy-Pontoise, 2010), et dans la thèse de doctorat « Matériaux nanostructurés polymères conjugués/nanotubes de carbone verticalement alignés pour la réalisation de supercondensateurs » de Marina Porcher (Université de Tours, 2016), ainsi que dans la publication « Poly(3-methylthiophene)/Vertically Aligned Multi-walled Carbon Nanotubes : Electrochemical Synthesis, Characterizations and Electrochemical Storage Properties in Ionic Liquids » par S. Lagoutte et al., parue dans Electrochimica Acta 130 (2014), p. 754-765. Selon cette publication, certains polymères à propriétés redox peuvent être déposés sur des VACNT par électropolymérisation dans un liquide ionique.

Néanmoins, l'un des inconvénients des matériaux pseudocapacitifs est leur mode de stockage par transfert électronique qui, s'il permet d'exalter le stockage des charges, diminue généralement la cyclabilité des électrodes et la cinétique de charge-décharge du dispositif. Ce problème n'a pas de solution connue, et pour éviter l'utilisation de dispositifs pseudocapacitifs on doit donc augmenter la quantité d'énergie stockée par unité de surface.

Un autre enjeu industriel des supercondensateurs électrochimiques est leur coût de fabrication, qui comprend entre autres le coût de fabrication des électrodes. La méthode présentant actuellement le plus fort potentiel de développement industriel sur grandes surfaces et à bas coût pour la synthèse de VACNT est le dépôt chimique en phase vapeur (Chemical Vapour Déposition (CVD)). Cette technique requiert un catalyseur à base de métal (CVD catalytique). Les procédés de CVD sont largement utilisés dans l'industrie mais ils restent chers en production de masse. On souhaite donc développer un procédé CVD industriel de synthèse de VACNT à bas coût tout en préservant les qualités du produit en vue de son application aux supercondensateurs. Dans cette optique on souhaite en particulier conduire le procédé CVD à pression atmosphérique (APCVD) et à basse température (compatible avec le dépôt sur un substrat de bande d'aluminium en défilement), et de préférence en une seule étape.

Pour la synthèse de VACNT, la CVD catalytique (CCVD) est déclinée suivant deux voies qui diffèrent par la manière dont les nanoparticules de catalyseur sont formées en une seule ou plusieurs étapes. Le procédé en plusieurs étapes implique des phases de pré-dépôt de couches minces et de démouillage thermique et demande le plus souvent l'emploi de promoteur de réaction. Il se prête moins bien à une production industrielle que le procédé en une seule étape (procédé CCVD assisté par aérosol). Dans ce dernier, les précurseurs de catalyseur et de carbone sont introduits simultanément dans le réacteur, les nanoparticules de catalyseur sont formées dans la phase gazeuse et sont ensuite déposées sur le substrat où elles constituent des germes pour la nucléation et la croissance continue de nanotubes de carbone à pression atmosphérique et sans ajout de promoteur. Ce procédé est robuste et assez simple à réaliser ; il est décrit dans le document EP 1 515 911 (Commissariat à l'Energie Atomique et aux Energies Alternatives).

S'il y a un bon espoir de pouvoir fabriquer des tapis de VACNT présentant une grande épaisseur (i.e. une grande longueur de VACNT) par des procédés continus à faible coût, le problème de la capacité de stockage d'énergie par unité de surface des dispositifs de supercondensateurs fabriqués à partir de ces tapis de VACNT reste pour l'instant sans solution évidente.

D'autres facteurs qui influent sur la qualité des VACNT sont la pureté du carbone déposé (i .e. la présence et nature d'hétéroatomes), la présence de zones désorganisées au sein des nanotubes constituant les VACNT, et la fraction (et la structure) du carbone déposé sous une forme autre que des nanotubes en carbone. L'impact de chacun de ces facteurs sur la qualité de dispositifs électroniques utilisant ces VACNT n'est pas totalement clair, en particulier en ce qui concerne les supercondensateurs. Il semble cependant exister un consensus que les VACNT pour supercondensateurs doivent être chimiquement purs et structurellement ordonnés.

Plus précisément, selon la publication « Existence and Kinetics of Graphitic Carbonaceous Impurities in Carbon Nanotube Forests to Assess the Absolute Purity » par S. Yasuda et al, parue en 2009 dans Nano Letters, Vol 9(2), p. 769-773, l'absence d'impuretés est un facteur de qualité essentiel pour les VACNT utilisés dans les supercondesateurs. Les zones désorganisées au sein des VACNT sont mentionnées, mais leur effet n'est pas caractérisé. Brown et al. (« Electrochemical Charge Storage Properties of Vertically Aligned Carbon Nanotube Films: Effects of Thermal Oxidation », The Journal of Physical Chemistry, p. 19526-19534 (2012)) considère que les zone désorganisées sont susceptibles de bloquer la pénétration des charges dans le tapis de VACNT et propose un traitement thermique oxydant pour les enlever. En cohérence avec cet enseignement, W. Lu et al. ("High performance electrochemical capacitors from aligned carbon nanotube électrodes and ionic liquid electrolytes", J. Power Sources, 189(2), 1270-1277 (2009)) montrent que l'élimination du carbone amorphe déposé sur la surface des nanotubes formant les VACNT par une gravure plasma augmente la capacitance des supercondensateurs.

La publication «Electrochemical characterization of carbon nanotube forest grown on copper foil using transition métal catalysts » par G. Atthipalli et al, parue en 2011 dans la revue Thin Solid Films 520, p. 1651-1655, enseigne que la bonne cristallinité des VACNT à parois multiples (par opposition au carbone amorphe) favorise la capacité de stockage de charges dans un supercondensateur. La publication « Growth time performance dependence of vertically aligned carbon nanotube supercapacitors grown on aluminum substrates » par R. Reit et al., parue en 2013 dans la revue Electrochimica Acta 91, p. 96-100, décrit la présence de carbone amorphe qui se dépose à la surface supérieure du tapis de VACNT ; ce dépôt gênerait la formation de la double couche électrolytique dans les supercondensateurs. S. Dörfler et al. (« High power supercap électrodes based on vertically aligned carbon nanotubes on aluminum », J. Power Sources 227, p. 218-228 (2013)) décrit la présence de carbone amorphe au sein de la couche de VACNT, qui diminuerait la capacité des supercondensateurs. S.H. Jo et al. ("Corrélation of field émission and surface microstructure of vertically aligned carbon microtubes", Applied Physics Letters 84(3), 413-415 (2004) décrivent également la présence d'une couche de carbone amorphe d'une épaisseur de 10 nm - 25 nm sur des VACNT.

En conclusion, afin de réduire cette fraction de carbone désorganisée ou amorphe considérée comme nuisible, les publications citées proposent soit un traitement oxydant ou basique permettant de l'enlever après le dépôt (Brown et al., Li et al., Kim et al., Lu et al.), soit des conditions opératoires particulières qui évitent ce dépôt (Atthiupalli et al., Reit et al., Dörfler et al.). Ces deux approches rendent le procédé de fabrication des électrodes plus complexe ou plus contraignant.

Les inventeurs constatent qu'il existe un besoin d'apporter une amélioration aux tapis (appelés aussi « forêts ») de VACNT en vue de leur utilisation en tant qu'électrode dans des supercondensateurs. En particulier, il serait souhaitable d'améliorer la capacité de stockage d'énergie par unité de surface des dispositifs de supercondensateurs fabriqués à partir de ces tapis de VACNT. L'état de la technique n'offre cependant pas de pistes pour arriver à une telle amélioration.

## Brève description des figures

Les figures illustrent certains aspects de l'invention ou de l'état de la technique, comme cela sera expliqué ci-dessous. Elles ne limitent pas la portée de l'invention.

La figure 1 montre de manière schématique un réacteur de type batch qui a été utilisé pour élaborer des VACNT pour réaliser l'invention.

La figure 2 montre des images obtenues par microscopie électronique à balayage (MEB) figures 2(a), (b) et (c)) et par microscopie électronique à transmission (MET, figure 2(d)) sur des zones de l'échantillon NI-836, à grandissements différents. La longueur de la barre en bas de chaque image indique la longueur d'environ 100 μm (figure 2(a)), d'environ 30 μm (figure 2(b)) d'environ 100 nm (figure 2(c)), d'environ 30 nm (figure 2(d)).

La figure 3 montre des images obtenues par microscopie électronique à balayage (MEB, figures 3(a), (b) et (c)) et par microscopie électronique à transmission (MET, figure 3(d)) sur des zones de l'échantillon NGI-1067, à grandissements différents. La longueur de la barre en bas de chaque image indique la longueur d'environ 100 μm (fig. 3(a)), d'environ 30 μm (fig. 3(b)), d'environ 100 nm (fig. 3(c)) ou d'environ 30 nm (fig. 3(d)).

La figure 4 montre des images obtenues par microscopie électronique à transmission à haute résolution sur des zones de l'échantillon NGI-1067, d'un NTC individuel avec un dépôt de carbone additionnel, désorganisé.

La figure 5 montre une analyse thermogravimétrique (ATG) de deux échantillons den tapis de VACNT selon l'invention avec des taux de carbone additionnel désorganisé différents.

La figure 6 montre deux micrographies MEB des échantillons utilisés dans la mesure de la figure 5 : échantillon 1 (fig. 6(a)) et échantillon 2 (fig. 6(b)). Le taux de carbone additionnel désorganisé est supérieur dans l'échantillon 1 comparativement à l'échantillon 2.

La figure 7 montre le spectre Raman typique obtenu sur un échantillon de VACNT selon l'invention avec un taux de 33% de carbone désorganisé.

La figure 8 montre des paramètres dérivés de la largeur de certaines bandes du spectre Raman pour différents échantillons de tapis de VACNT selon l'invention présentant un taux de carbone additionnel désorganisé différent. La figure 8(a) montre la largeur de la bande D sur l'axe principal (points circulaires) et le rapport entre l'intensité de la bande 3D et de l'intensité de la bande G sur l'axe secondaire (points triangulaires) ; la figure 8(b) montre le rapport entre la largeur de la bande D et la largeur de la bande G.

La figure 9(a) montre le taux de carbone additionnel désorganisé en fonction de la durée de la synthèse dans un réacteur de type batch, pour différents mélanges et débits de gaz.

La figure 9(b) montre la hauteur des tapis de VACNT en fonction de la durée de la synthèse, pour les mêmes conditions de synthèse que la figure 9(a).

La figure 11(a) montre la densité volumique, la figure 11(b) le taux de carbone additionnel désorganisé, et la figure 11(b) la hauteur du tapis de VACNT, en fonction du volume total d'acétylène injecté dans le réacteur. La figure 11(d) montre pour les mêmes conditions de synthèse le taux de carbone additionnel désorganisé.

La figure 12 montre trois types d'enceintes qui peuvent contenir des supercondensateurs selon l'invention : une enceinte de type pile bouton (figure 12(a)), une enceinte de type poche souple (figure 12(b)), et une enceinte de type pile cylindrique (figure 12(c)).

La figure 13 montre un diagramme de Ragone à 2,5 V de deux supercondensateurs avec un électrolyte formé de 1M $ET_4N$ $BF_4$ dans l'acétonitrile et deux électrodes formées de tapis de VACNT d'une épaisseur de 42 $\mu$m et 36 $\mu$m. Point carrés : 56% de carbone additionnel désorganisé (échantillon NGI-1113) ; points triangulaires : pas de carbone additionnel désorganisé (échantillon NI-766).

La figure 14 montre un voltamogramme comparatif de deux supercondensateurs : l'un comporte comme matériau d'électrodes un tapis de VACNT (référence NGI-1067) d'une épaisseur de 105 $\mu$m et 119 $\mu$m avec 65% de carbone additionnel désorganisé, l'autre un tapis de VACNT de même épaisseur mais sans carbone additionnel désorganisé (référence NI-836).

La figure 15 montre un diagramme de Ragone des supercondensateurs de la figure 14 (points carrés : 65% de carbone additionnel désorganisé ; point triangulaires : pas de carbone additionnel désorganisé). Les points ronds correspondent à un supercondensateur comparatif avec électrodes en carbone activé (épaisseur 100 $\mu$m).

La figure 16 montre un diagramme de Ragone de trois supercondensateurs avec des électrodes présentant entre 56 % et 65 % de carbone additionnel désorganisé, pour trois hauteurs de tapis différentes : 42 $\mu$m (point circulaires), 119 $\mu$m (point carrés), 152 $\mu$m (points triangulaires).

La figure 17 montre un voltamogramme d'un supercondensateur en configuration Pouch-Cell de 24 cm$^2$ de surface de supercondensateur, selon l'invention avec tapis VACNT et carbone additionnel désorganisé. Vitesse de balayage : 50 mV/s$^{-1}$.

La figure 18 montre un diagramme de Ragone comparatif d'un supercondensateur en configuration Pouch-Cell de 24 cm$^2$ de surface de supercondensateur selon l'invention (points circulaires) et d'un supercondensateur commercial (points triangulaires) ; épaisseur de l'électrode en carbone activé 100 $\mu$m.

La figure 19 montre des micrographies MEB prise en milieu du tapis VACNT de deux électrodes selon l'invention (figure 19(a) : référence C1, figure 19(b) : référence C3), utilisées pour fabriquer les supercondensateurs décrits dans l'exemple 2.3.

La figure 20 montre le spectre Raman caractéristique de CNT multi-feuillets, avec la nomenclature des bandes.

La figure 21 montre le spectre Raman caractéristique de nanotubes de carbone multi-feuillets avec une déconvolution numérique des bandes (figure 21(a)) et les modes de symétrie associés aux bandes G et D (figure 21(b)).

## Objets de l'invention

Les inventeurs ont découvert de manière surprenante que la présence de carbone additionnel désorganisé dans le tapis de VACNT peut améliorer la capacité de stockage d'énergie par unité de surface des dispositifs de supercondensateurs fabriqués à partir de ces tapis de VACNT. En particulier, c'est la présence de carbone additionnel désorganisé déposé sur la face externe des nanotubes qui entraîne cet effet d'amélioration. Contrairement à l'état de la technique cité ci-dessus, dans la présente invention non seulement on ne cherche pas à enlever le carbone désorganisé après le dépôt des VACNT, mais encore on cherche à promouvoir le dépôt de carbone désorganisé.

Ainsi, selon l'invention l'utilisation de VACNT incluant du carbone désorganisé permet d'augmenter la capacitance surfacique et volumique du dispositif tout en gardant un mode de stockage purement capacitif. Une telle configuration (alignement et espacement régulier d'une matrice de NTC incorporant du carbone additionnel désorganisé) apportera un gain significatif en capacitance (et donc d'énergie $E = 1/2$ $CV^2$ à tension constante) sans perdre en puissance ni en cyclabilité (par rapport à des matériaux à stockage pseudo-capacitifs).

L'invention concerne un composite comprenant des nanotubes de carbone verticalement alignées (VACNT) sur un substrat, caractérisé en ce que ledit composite comprend du carbone additionnel désorganisé déposé sur la face extérieure des nanotubes.

Selon des modes de réalisation particuliers, lesdits nanotubes sont en particulier des nanotubes à parois multiples ; ledit carbone additionnel désorganisé comprend des domaines graphitiques ; ledit composite comprend au moins 10 %, de préférence au moins 30 %, et encore plus préférentiellement au moins 50 % de carbone additionnel désorganisé, par rapport à la masse des nanotubes de carbone (mais de préférence pas plus que 90 %, et plus préférentiellement pas plus que 80 %) ; le rapport de largeur entre la bande D et la bande G dans un spectre Raman des VACNT (enregistré avec une longueur d'onde d'excitation de 532 nm et une puissance du laser de 0,2 mW) est supérieur à 2,0, de préférence supérieur à 2,2 et encore plus préférentiellement supérieur à 2,4.

La longueur moyenne des nanotubes est comprise entre 30 $\mu$m et 300 $\mu$m, de préférence entre 50 $\mu$m et 150 $\mu$m, et encore plus préférentiellement entre 70 $\mu$m et 130 $\mu$m ; ces plages préférentielles se réfèrent en particulier à l'aptitude du composite à être utilisé comme électrode dans un supercondensateur.

Le substrat dudit composite peut être une tôle ou feuille métallique, de préférence à base d'aluminium.

L'invention concerne également un composite comme décrit ci-dessus, susceptible d'être obtenu par un procédé de dépôt chimique en phase vapeur en présence d'un catalyseur dans une enceinte chauffée, un précurseur dudit catalyseur étant injecté de manière continue dans ladite enceinte chauffée. Ce procédé conduit à un composite dont les nanotubes de carbone comportent (et en particulier : renferment en leur centre) des particules métalliques provenant dudit catalyseur.

L'invention concerne également un ensemble de nanotubes de carbone alignés et parallèles, obtenu à partir d'un composite comme décrit ci-dessus par enlèvement des nanotubes dudit substrat. Un tel ensemble de nanotubes de carbone alignés et parallèles est notamment constitué par un tapis de VACNT auto-supporté. Il peut également être supporté par un autre substrat que celui sur lequel il a été préparé initialement à partir d'une phase gazeuse, par substitution du substrat selon des techniques connues de l'homme du métier. Lors de cet enlèvement des VACNT de leur substrat natif le taux de carbone additionnel désorganisé ne change pas.

L'invention concerne également un procédé permettant de générer un composite comprenant des VACNT sur un substrat, ledit composite comprenant un dépôt de carbone additionnel, désorganisé. Ce dépôt, qui peut être obtenu dans la même étape de procédé que le dépôt des VACNT, exalte les propriétés de stockage électrochimique par unité de surface, alors que l'état de la technique décrit généralement le carbone désorganisé (additionnel ou non) comme préjudiciable aux performances et que l'on cherche à supprimer (par oxydation thermique par exemple) ou à éviter par une conduite appropriée du procédé de dépôt des VACNT. Ce procédé comprend la décomposition chimique d'un gaz source de carbone dans un réacteur comprenant une enceinte chauffée et la croissance des VACNT sur un substrat, en présence d'un catalyseur, dans lequel

- une phase gazeuse comprenant ladite source de carbone et un précurseur de catalyseur est injectée de manière continue dans ladite enceinte chauffée à une température comprise entre 500 °C et 700 °C et à une pression comprise entre 0,5 bar et 1,5 bar ;
- ledit précurseur de catalyseur comprend un métal de transition, choisi de préférence dans le groupe formé par le fer, le nickel, le cobalt.

Selon des modes de réalisation particuliers, la pression dans ladite enceinte est comprise entre 0,6 bar et 1,4 bar, de préférence entre 0,8 bar et 1,2 bar, et encore plus préférentiellement entre 0,9 bar et 1,1 bar ; ladite enceinte est chauffé à une température inférieure à 670°C, préférentiellement inférieure à 650 °C et encore plus préférentiellement comprise entre 500 °C et 630 °C ; ladite phase gazeuse injectée dans ladite enceinte comprend de l'acétylène en tant que source de carbone, le précurseur de catalyseur avec son gaz vecteur (qui peut être une source de carbone), et optionnellement un gaz inerte (de préférence l'argon) ; ladite phase gazeuse injectée dans ladite enceinte comprend également de l'hydrogène, de préférence entre 25 % et 100 % (et plus préférentiellement entre 50% et 85 %) de la somme acétylène + hydrogène ; la phase gazeuse injectée dans ladite enceinte consiste essentiellement en acétylène en tant que source de carbone, en hydrogène, en ferrocène en tant que précurseur de catalyseur, en toluène en tant que gaz vecteur du ferrocène, et en argon en tant que gaz inerte ; la vitesse de passage de ladite phase gazeuse est comprise entre 1 mm/s et 15 mm/s, et de préférence entre 3 mm/s et 10 mm/s.

De manière préférée, la teneur en fer par rapport à la teneur totale en carbone dans la phase gazeuse, soit le rapport massique Fe/C, est comprise entre 0,4 % et 1,2 %, de préférence entre 0,5 % et 1,1 %, et encore plus préférentiellement entre 0,55 % et 0,9 % (en pourcent massique).

L'invention concerne encore une électrode pour dispositif électronique ou électrotechnique, caractérisé en ce qu'elle comprend au moins une électrode comportant un composite ou un ensemble de nanotubes tels que décrit ci-dessus. Ledit dispositif électronique ou électrotechnique peut être un condensateur électrochimique, tel qu'un supercondensateur. Ce dernier représente un objet de la présente invention ; l'une au moins de ces deux électrodes (et de préférence tous les deux) peuvent comprendre un composite tel que décrit ci-dessus ou un ensemble de nanotubes tel que décrit ci-dessus. Dans un tel supercondensateur, les deux électrodes sont contenues dans une enceinte, séparées par un séparateur, et ledit dispositif comprenant encore un électrolyte qui comprend au moins un anion, au moins un cation, et optionnellement un solvant.

Un dernier objet de la présente invention est un procédé de fabrication d'un tel supercondensateur, comprenant les étapes suivantes :

(i) Approvisionnement d'électrodes selon l'invention, de séparateurs, de collecteurs de courant, de l'électrolyte et d'une enceinte ;

(ii) Soudage (de préférence à ultrasons) des collecteurs de courant sur les électrodes,

(iii) Assemblage des électrodes et séparateurs,

(iv) Soudage (de préférence à ultrasons) des collecteurs de courant des électrodes aux borniers de l'enceinte,

(v) Mise en place de l'assemblage électrodes/séparateurs dans l'enceinte boitier (sachant que les étapes (iv) et (v) peuvent être inversées),

(vi) Ajout et diffusion de l'électrolyte dans ladite enceinte,

(vii) Scellement de l'enceinte.

Dans un mode de réalisation, le dispositif condensateur selon l'invention est un système de type symétrique comprenant deux électrodes de même nature, lesdites électrodes étant constituées d'un substrat métallique (en aluminium de préférence) sur lequel est déposé un tapis de nanotubes de carbones verticalement alignés (VACNT) possédant ledit carbone additionnel désorganisé. Ledit dispositif condensateur comprend par ailleurs un électrolyte liquide. Un tel dispositif selon l'invention permet de stocker plus de charges électriques qu'un système identique fabriqué avec des électrodes présentant un tapis de VACNT de même longueur moyenne et de même densité surfacique moyenne, mais qui ne présente pas de carbone additionnel désorganisé.

**Description détaillée**

Nous décrivons ici des modes de réalisation de l'invention. Sauf mention contraire, les pourcentages indiqués pour des solides ou liquides sont des pourcentages massiques.

1. Description du procédé de synthèse des VACNT

Selon l'invention, la croissance des VACNT sur un substrat se fait en présence d'une source de catalyseur et d'une source de carbone qui sont tous les deux introduits en continu dans le réacteur. Selon un mode de réalisation très avantageux, on introduit la source de catalyseur dans le réacteur sous forme liquide après dissolution du précurseur catalytique dans un solvant carboné, et la source de carbone sous forme gazeuse ; cela peut se faire par injection impulsionnelle à l'aide d'une pompe à injection, comme cela a été décrit dans le brevet EP 1 515 911 cité ci-dessus.

Selon un aspect essentiel de l'invention, les gaz réactifs comprennent un gaz « source de carbone » et un « précurseur de catalyseur ». Le précurseur de catalyseur peut être prédéposée sur le substrat ou, au contraire (et de manière préférée), être co-injectée avec la source de carbone ; cette dernière variante permet une croissance ininterrompue des nanotubes de carbone sur le substrat. Le précurseur de catalyseur est notamment choisi parmi les métallocènes de métal de transition comme, par exemple, le ferrocène, le nickelocène, le cobaltocène ou l'un quelconque de leurs mélanges. La source de carbone peut être liquide, solide ou gazeuse ; elle est notamment choisie parmi les hydrocarbures, les alcools, le monoxyde de carbone, les halogénures de carbone (ces derniers étant moins préférés), le toluène, le cyclohexane, les huiles d'origine végétale, la benzylamine, l'acétonitrile, l'éthylène, l'acétylène, le xyléne, le méthane et l'un quelconque de leurs mélanges.

Dans un mode de réalisation particulier de cette synthèse, le précurseur de catalyseur est le ferrocène. Etant solide, il est dissout dans un solvant approprié, tel que le toluène, et véhiculé dans le réacteur sous forme d'aérosol de gouttelettes d'une solution. Dans ce mode de réalisation, le toluène n'est qu'un vecteur du ferrocène, il ne se décompose pas d'une manière significative dans le domaine de température préféré du procédé.

La source de carbone préférée dans le cadre de la présente invention est l'acétylène, dont la température de décomposition est compatible avec les températures préférées du procédé. Le mode de réalisation le plus préféré combine l'acétylène en tant que source de carbone et le ferrocène en tant que précurseur de catalyseur, avec un ajout d'hydrogène (de préférence ne dépassant pas 30% du débit gazeux total).

Selon un mode de réalisation avantageux de l'invention on effectue la synthèse du tapis de VACNT par CVD sur un substrat métallique (en particulier sur l'aluminium, si la température n'est pas trop élevée), à basse température (inférieure à 700 °C, de préférence inférieure à 670 °C, de préférence comprise entre 500°C et 650°C), et de préférence à pression atmosphérique. On peut utiliser un réacteur de type batch, ou un réacteur continu (de préférence de type « roll-to-roll »). De préférence, le substrat est une bande métallique qui défile dans une zone réactionnelle dans laquelle se déroule le dépôt des VACNT par CVD. A titre d'exemple, une température comprise entre environ 580 °C et environ 630 °C est préférée en mode statique, et cette température convient également avec un substrat en défilement.

La valeur de température indiquée ci-dessus correspond à la température de consigne du four ; elle correspond à la température du substrat dans des conditions stationnaires de flux de gaz, en l'absence de réaction de dépôt de VACNT. En pratique, ces conditions peuvent être atteintes en se plaçant dans les conditions de la réaction, en injectant tous les gaz au débit prévu, sauf le précurseur de catalyseur qui est absent. En effet, la réaction catalytique de décomposition de l'acétylène étant exothermique dans les conditions du procédé selon l'invention, la température locale du substrat au cours de la réaction peut être supérieure à la température de consigne.

La pression est avantageusement atmosphérique, cette expression englobant une légère surpression ou sous-pression par rapport à la pression atmosphérique. De manière plus précise, dans un mode de réalisation avantageux la pression est comprise entre 0,6 bar et 1,4 bar, préférentiellement entre 0,8 bar et 1,2 bar et encore plus préférentiellement entre 0,9 bar et 1,1 bar.

Le gaz source de carbone préférée est l'acétylène, qui est compatible avec les températures du procédé entre 500°C et 650°C. Le mélange gazeux dans le réacteur doit comprendre de l'hydrogène, qui permet la décomposition des métallocènes et notamment du ferrocène. L'hydrogène peut provenir de la décomposition de l'acétylène aux températures avantageuses du procédé selon l'invention, mais il est préférable d'ajouter de l'hydrogène gazeux au mélange réactionnel.

Le précurseur de catalyseur préféré est le ferrocène, qui forme, en se décomposant, des particules nanométriques de fer. Le fer catalyse la décomposition de l'acétylène, et lesdites particules de fer agissent comme germe pour la croissance de nanotubes.

Dans un mode de réalisation avantageux, la source de catalyseur (par exemple le ferrocène) est dissoute dans un solvant approprié (pour le ferrocène par exemple du toluène). Dans un mode de réalisation avantageux du procédé selon l'invention, la teneur en ferrocène dans le toluène est comprise entre 2,5 % et 12 %, et préférentiellement entre 7,5 % et 11 %.

Le ferrocène se décompose à une température d'environ 826°C ce qui permet de faire croître les VACNT à une température de l'ordre de 850°C, mais pas à une température de l'ordre de 670°C ou moins (comme cela est préféré dans le cadre de la présente invention).

En effet, en-dessous de la température normale de décomposition du ferrocène (826 °C), il s'avère nécessaire d'ajouter de l'hydrogène pour libérer les atomes de fer du ferrocène à une température plus basse, qui est avantageusement comprise entre 400°C et 450°C. De plus, dans le domaine de température dans lequel se déroule le procédé selon la présente invention, qui est de l'ordre de 670°C ou moins (de préférence inférieure à 650°C et encore plus préférentiellement inférieure à 630°C), le toluène se décompose très peu et il ne constitue donc pas une source de carbone favorable à la croissance de NTC. Par conséquent il est nécessaire d'introduire une source de carbone qui se décompose à plus basse température ; cette source de carbone est très avantageusement l'acétylène.

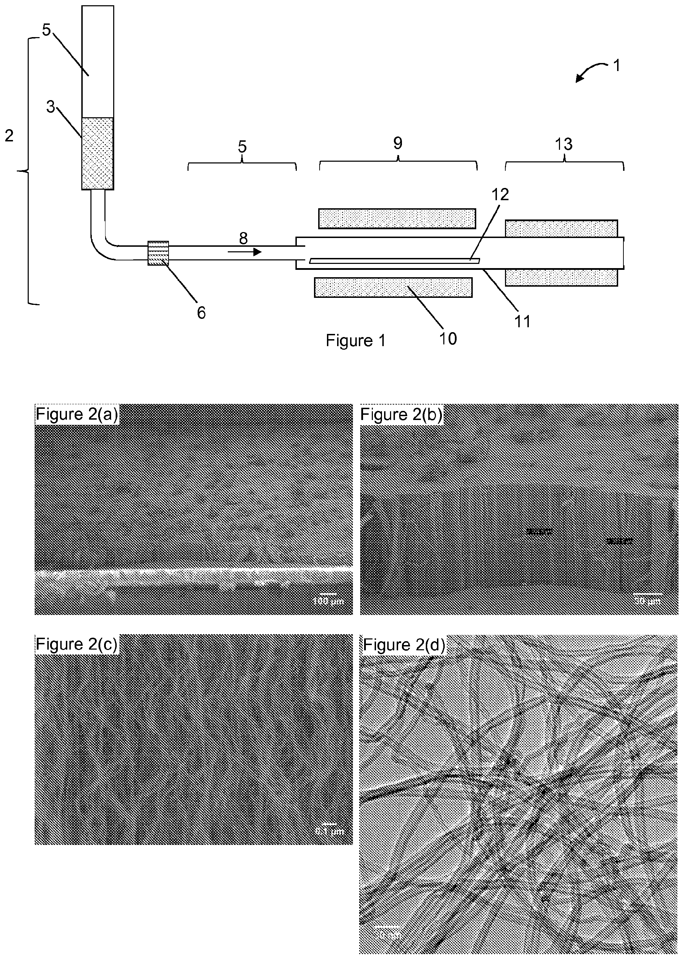

La figure 1 montre de manière schématique un réacteur **1** de type batch qui permet de déposer des VACNT utilisables pour réaliser l'invention. Une unité d'injection **2** permet d'injecter (de préférence à la température ambiante) une solution liquide **3** (contenue dans un réservoir **4**) comportant le précurseur de catalyseur (de préférence du ferrocène dissout dans du toluène) dans l'évaporateur **5** sous forme de fines gouttelettes dans un gaz vecteur. Lesdites gouttelettes sont générées par un système d'injection qui génère l'aérosol **6** parcouru par ledit gaz vecteur. Ce dernier comporte avantageusement le gaz source de carbone, ou ledit gaz source de carbone peut être ajouté en aval du système d'injection **6**. L'évaporateur **5** est chauffé par un premier moyen de chauffage (non montré sur la figure ; en l'occurrence et de manière optionnelle ce moyen de chauffage permet la régulation d'au moins deux (de préférence trois) zones de température) de manière à évaporer au moins en partie le solvant des fines gouttelettes injectées précédemment formées. Le précurseur de catalyseur est transporté dans un flux de gaz vecteur **8** vers l'unité de four **9** où se déroule la synthèse des VACNT. Ladite unité de four **9** comprend un deuxième moyen de chauffage **10,** de préférence tubulaire (qui, en l'occurrence et de manière optionnelle permet la régulation d'au moins deux (de préférence trois) zones de température), dans lequel est inséré un tube **11,** de préférence en métal ou en quartz. Ce tube **11** est relié à l'évaporateur **5** et parcouru par ledit flux gazeux. Le substrat **12,** qui peut être une bande ou des pastilles individuelles (de préférence posées sur une bande), est posé dans ledit tube ; le dépôt du tapis de VACNT a lieu sur ce substrat **12**. Le réacteur **1** peut comporter en aval de l'unité de four **9** une zone de refroidissement **13**. Le flux gazeux traverse en aval du four des pièges (non représentées sur la figure) pour condenser les gaz et retirer les particules qui auraient pu être entraînés jusqu'à ce point. La régulation des débits de gaz se fait de manière connue par un panneau de distribution de gaz (non représenté sur la figure) avec un débitmètre (manuel ou automatique) par type de gaz (Ar, $H_2$, $C_2H_2$) ; la régulation de la pression peut se faire de manière manuelle ou automatique. Un réacteur utilisable pour le dépôt sur un substrat au défilé est décrit dans le document FR 3 013 061 (Commissariat à l'Energie Atomique et aux Energies Alternatives).

Une des particularités du procédé selon l'invention réside dans le fait que la croissance des VACNT et le dépôt du carbone additionnel désorganisé se font dans la même étape de procédé, en concomitance.

Selon l'invention, pour favoriser la présence du carbone additionnel désorganisé dans l'espace inter-tube :

- La gamme préférentielle de température de consigne du four est située avantageusement entre 580°C et 630°C.
- La gamme préférentielle du rapport Fe/C est avantageusement entre 0,4 % et 1,5 %.
- La gamme préférentielle de volume total $C_2H_2$ injecté est avantageusement entre 1 et 9 L.
- La gamme préférentielle de vitesse de passage des gaz est avantageusement comprise entre 2 mm/s et 11 mm/s.

D'une manière plus générale, les inventeurs se sont rendus compte que la formation du carbone additionnel désorganisé est favorisée par un volume total d'acétylène élevé, une vitesse de passage du flux d'acétylène faible (ce qui conduit à un temps de résidence de l'acétylène dans la zone réactionnelle assez long), et une teneur en catalyseur assez faible (mais suffisante pour remplir son rôle de catalyseur). Ainsi, la formation du carbone additionnel désorganisé dans l'espace inter-tube est favorisé par la concordance des plages de paramètres suivants :

- Le volume total d'acétylène est compris entre 0,7 et 6 mL/mm$^2$ : ce paramètre exprime le volume (en millilitres) d'acétylène injecté dans la chambre de réaction par rapport à la section (en mm$^2$) de ladite chambre de réaction, ladite section étant traversée par ce flux d'acétylène ;
- La vitesse de passage dudit flux d'acétylène est comprise entre 1 mmls et 15 mmls, et de préférence entre 1 mm/s et 10 mm/s, et encore plus préférentiellement entre 2 mm/s et 10 mmls ;
- La teneur en fer exprimée par le rapport massique Fe/C est comprise entre 0,4 % et 1,5 %, de préférence entre 0,4 % et 1,4 %, plus préférentiellement entre 0,5 % et 1,1 % et encore plus préférentiellement entre 0,5 % et 0,9 % ; dans ce rapport le carbone est le carbone total dans le flux gazeux.

Pour ces conditions de dépôt exprimées par l'ensemble de ces trois paramètres, la température de consigne de la chambre de réaction se situe avantageusement entre 580 °C et 630 °C ; cette plage de température convient particulièrement bien au dépôt sur un substrat en aluminium.

Un tapis de VACNT particulièrement favorable pour l'utilisation en tant qu'électrode dans les supercondensateurs présente un taux de carbone additionnel désorganisé supérieur à 50%, et présente de préférence une hauteur des VACNT comprise entre environ 70 $\mu$m et environ 150 $\mu$m, encore plus préférentiellement entre environ 75 $\mu$m et environ 130 $\mu$m (une valeur d'environ 120 $\mu$m étant optimale). Un tel produit peut être obtenu à partir des paramètres indiqués dans le paragraphe précédent dans les conditions suivantes

- La gamme préférentielle de température de consigne du four est entre 600°C et 630°C ; et / ou
- La gamme préférentielle du rapport Fe/C est entre 0,6 % et 0,8 % ; et/ou
- La gamme préférentielle de vitesse de passage des gaz est comprise entre 2 mm/s et 8,7 mm/s ;

sachant que de manière encore plus préférentielle on cumule deux de ces critères, ou tous les trois.

## 2. Caractérisation des tapis de VACNT présentant du carbone additionnel désorganisé

Selon un aspect essentiel de l'invention, le tapis de VACNT comprend du carbone additionnel désorganisé. La présence de ce carbone additionnel désorganisé peut être démontrée par spectroscopie Raman, mais cette technique ne permet pas de le localiser. Le carbone additionnel désorganisé peut être visualisé de manière directe par microscopie électronique à balayage (MEB), mais cette technique ne permet pas de caractériser son degré de désordre. La seule technique qui permette de le visualiser et de caractériser sa structure désorganisée est la microscopie électronique par transmission (HR-MET) à haute résolution ; son champ de vision est cependant très limité.

Nous décrivons ici la caractérisation par spectroscopie Raman. L'identification, la désignation et l'interprétation de l'élargissement des bandes qui apparaissent dans le spectre Raman des matériaux graphitiques est connue de l'homme du métier, voir par exemple : « Raman spectroscopy of graphite » par S. Reich et C. Thomsen (Phil. Trans. R. Soc. Lond. 1 (2004) 362, p. 2271-2288 ; et « Raman spectroscopy of graphene and graphite : Disorder, electron-phonon coupling doping and nonadiabatic effects » par A. Ferrari (Solid State Communications 143 (2007), p. 47-57).

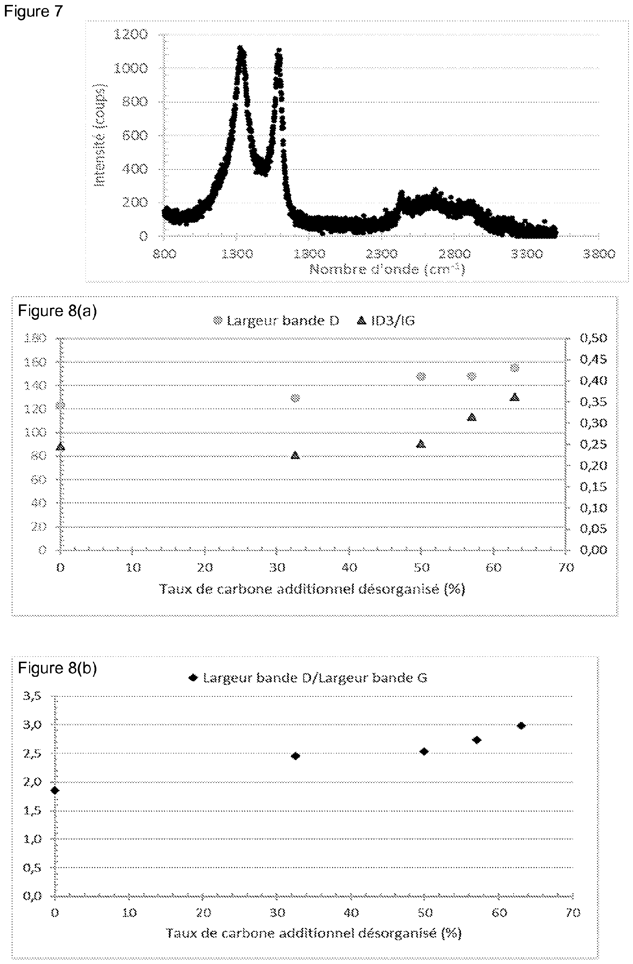

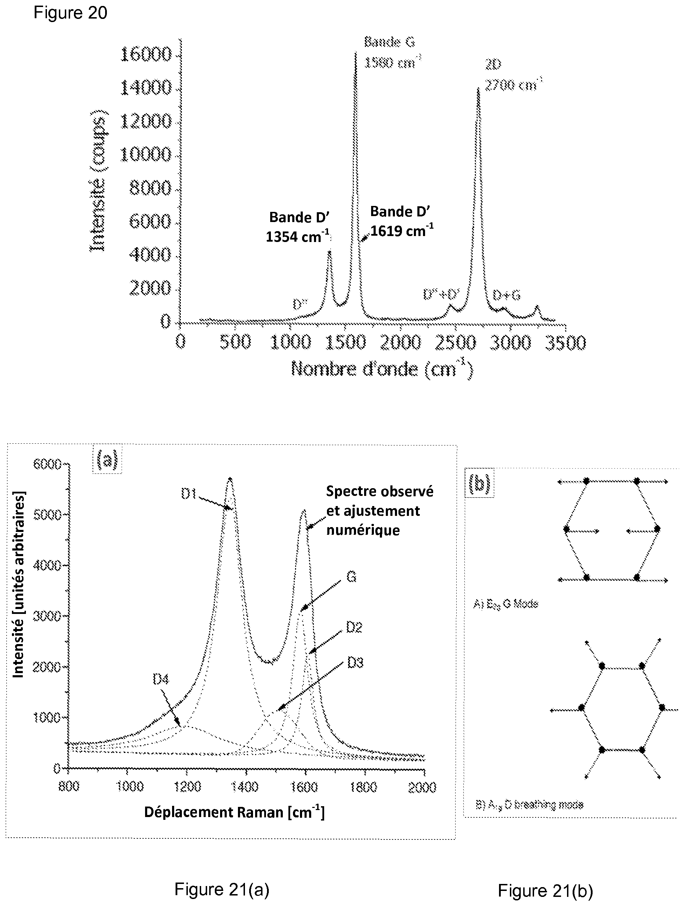

Un spectre Raman caractéristique et représentatif d'un nanotube de carbone aligné est montré sur la figure 20 (voir : C. Castro, « Mécanismes de croissance de nanotubes de carbone alignés : relation catalyseur - nanotube », thèse de doctorat, Université de Paris XI (Orsay), 2009). La figure 21(a) montre la décomposition des bandes D, D' et G, la figure 21(b) des modes de symétrie associés à ces bandes. La figure 7 montre un spectre Raman d'un échantillon de VACNT selon l'invention, les figures 8(a) et (b) montre l'exploitation de paramètres numériques obtenus à partir des spectres Raman, comme cela est expliqué ci-dessous de manière générale, et de manière spécifique dans la section 1 de la partie « Exemples ».

Dans le domaine 800 - 1 800 cm$^{-1}$, les nanotubes de carbone sont caractérisés au premier ordre par deux bandes principales D (mode de respiration de la symétrie $A_{1G}$) et G (due aux phonons de la zone centrale de la symétrie $E_{2G}$ respectivement centrée à 1 350 cm$^{-1}$ et 1 580 cm$^{-1}$. La bande G est caractéristique du degré d'organisation du carbone et est attribuée aux mouvements relatifs des atomes de carbone de type sp$^2$ localisés au sein des cycles aromatiques constituant les feuillets (ou plans) de graphène. La bande D (ou D1) est proportionnelle à l'ensemble des défauts au sens large puisqu'elle caractérise la taille des cristallites, elle peut traduire la présence de carbone amorphe et est attribuée aux carbones des cycles aromatiques en présence de défauts structuraux (voir F Tuinstra et JL Koenig, « Raman Spectrum of Graphite », J. Chem. Phys. 53, 1126-1130 (1970)).

**EP 3 676 221 B1**

A ces deux bandes principales, s'ajoutent éventuellement deux autres bandes : la bande D2 centrée à 1 620 cm$^{-1}$ (épaulement de la bande G) reflète la distribution des distances inter-feuillets ; et la bande D3 centrée à 1 500 cm$^{-1}$ située entre les bandes D et G et traduisant la présence de défauts locaux propres au carbone amorphe hybridé sp$^3$ (comme des carbones hybridés sp$^3$ parmi des structures très majoritairement hybridés sp$^2$ ou des défauts interstitiels (voir T Jawhari et al., « Raman spectroscopic characterization of some commercially available carbon black materials », Carbon 33, 1561-1565 (1995)) et YC Choi et al., « Novel Method of Evaluating the Purity of Multiwall Carbon Nanotubes Using Raman Spectroscopy », J. Nanomater. 2013, 1-6 (2013)). Ces deux études font encore apparaître une bande dont le maximum se trouve situé entre 1 250 et 1 300 cm$^{-1}$, souvent nommée D4 et intégrée dans le pied de pic de la bande D qui correspondrait à la contribution unique du carbone amorphe hybridée sp$^3$. De plus, au second ordre à 2 700 cm$^{-1}$ une bande 2D (harmonique de la bande D) est observable, elle est indépendante des défauts et on la rencontre souvent dans des structures graphitiques parfaites.

Il est communément admis dans la littérature que la qualité structurale des nanotubes de carbone peut être évaluée par le rapport des intensités des bandes D et G (ID/IG), et plus rarement par le rapport des intensités I2D/IG (voir la thèse citée de Castro). Plus ces rapports sont faibles, et meilleure est la qualité structurale du carbone, à savoir qu'il y a moins de défauts structuraux. Toutefois, on sait que le rapport ID/IG est insuffisant pour juger du caractère plus ou moins amorphe d'une structure carbonée (il peut diminuer en valeur absolue lorsque la proportion de carbone amorphe hybridé sp$^3$ augmente), voir AC Ferrari & J Robertson, « Resonant Raman spectroscopy of disordered, amorphous, and diamondlike carbon », Phys. Rev. B64, (2001)). C'est pourquoi, dans le cadre de la présente invention, outre le rapport des intensités ID/IG et I2D/IG, on a également évalué le rapport des intensités ID3/IG (voir Sadezki et al., « Raman Microspectroscopy of Soot and Related Carbonaceous Materials: Spectral Analysis and Structural Information », Carbon 43 (2005), p. 1731-1742)).

Afin de déterminer les rapports d'intensité des bandes, il est nécessaire de décomposer (déconvoluer) les bandes caractéristiques du spectre. Pour cela, une procédure identique a été appliquée : tout d'abord, une ligne de base est définie, puis chaque bande est ajustée en imposant une gamme donnée en nombre d'onde, notamment les déconvolutions ont été effectuées dans la gamme de 1200 à 1700 cm$^{-1}$ afin déterminer les différentes composantes des bandes D et G. Les ajustements sont réalisés en appliquant une fonction de Voigt qui correspond à une combinaison d'une fonction gaussienne et d'une fonction lorentzienne; après ajustement des bandes théoriques déconvoluées à la courbe correspondant au spectre expérimental, les bandes D et G possèdent une contribution totalement lorentzienne, la bande 2D est aux deux-tiers lorentzienne tandis que les composantes des bandes D2, D3 et D4 s'avèrent majoritairement gaussiennes. La position au centre, la hauteur (ou l'intensité), la largeur à mi-hauteur et l'aire de chacune des contributions peuvent ainsi être déterminées.

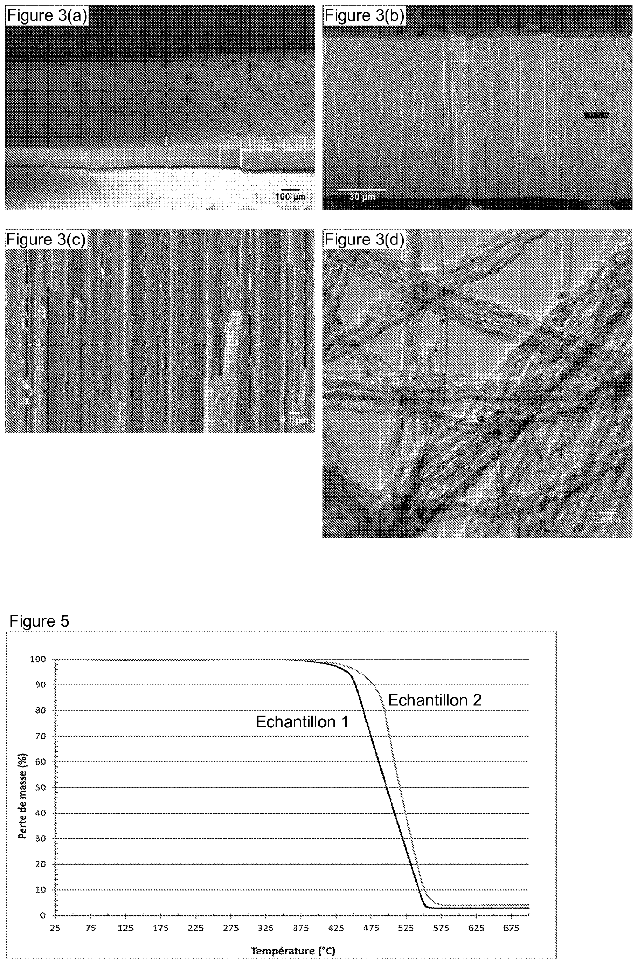

La présence de carbone additionnel désorganisé peut être visualisée de manière directe par microscopie électronique à balayage (MEB). On observe qu'il se dépose à l'extérieur des nanotubes, entre les tubes du tapis (voir la figure 3(c), en comparaison avec la figure 2(c) qui ne montre pas de carbone additionnel). Ainsi, ce carbone qui se dépose à l'extérieur des tubes est du carbone « additionnel » dans la mesure où il ne fait pas partie des nanotubes eux-mêmes. La microscopie électronique à transmission (MET) permet de travailler avec un champ de vision suffisamment large pour visualiser ce carbone additionnel de manière précise à l'extérieur des nanotubes (figure 3(d), en comparaison avec la figure 2(d) obtenue pour un échantillon sans carbone additionnel). En ce qui concerne la localisation du carbone additionnel, les inventeurs n'ont pas observé qu'il se forme ailleurs qu'en surface externe des nanotubes, c'est-à-dire entre les nanotubes avec le procédé selon l'invention, et en particulier il ne s'agit pas d'un dépôt au-dessus du tapis de VACNT ; un tel dépôt (qui a été observé dans d'autres conditions opératoires) nuit aux propriétés spécifiques des VACNT en vue de leur utilisation comme électrodes dans des dispositifs électroniques et électrotechniques, et doit être évité.

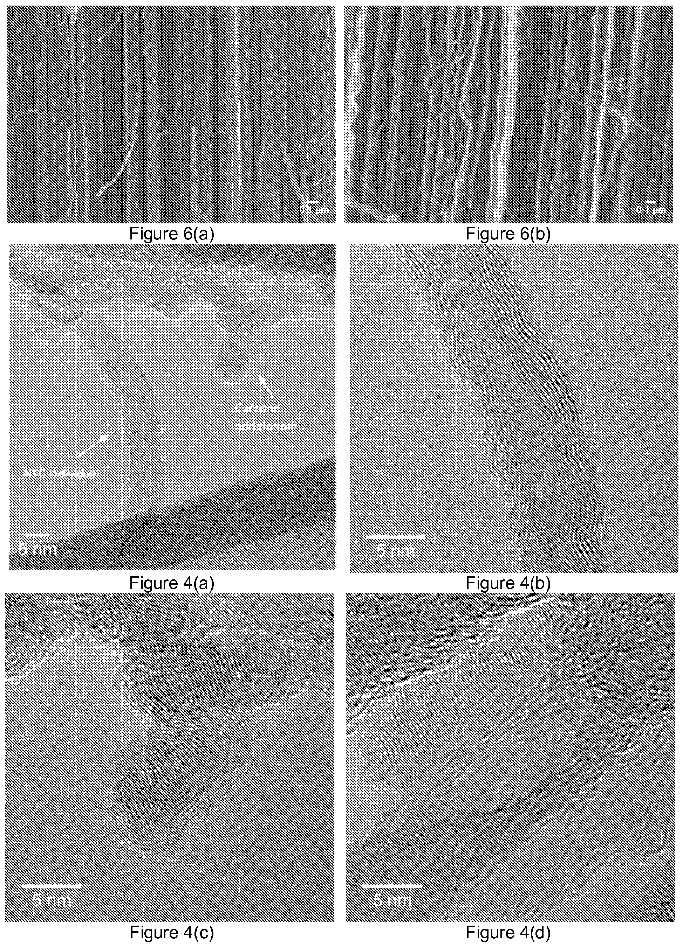

Le caractère désorganisé du carbone additionnel peut être démontrée de la manière la plus directe par microscopie électronique à transmission à haute résolution (MET), car cette technique permet de voir directement les zones graphitique (ou « graphéniques ») de ce carbone additionnel, (voir les figures 4, discutée en détail dans la section « Exemples »). Selon l'invention, le carbone additionnel est désorganisé, dans la mesure où les zones graphitiques présentes typiquement une longueur compris entre quelques nanomètres et quelques dizaines de nanomètres. Le carbone additionnel désorganisé n'est pas du carbone amorphe, même s'il peut comprendre entre deux domaines graphéniques ou graphitiques des zones plus fortement désorganisées qui s'apparentent à une zone amorphe.

La quantification de ce carbone additionnel désorganisé est possible de manière estimative, en comparant la masse d'un échantillon réputé dépourvu de carbone additionnel avec un échantillon présentant du carbone additionnel désorganisé. La présence ou l'absence de carbone additionnel désorganisé peut être démontrée en utilisant les trois techniques discutées ci-dessus. Pour que cette comparaison soit valable il faut tenir compte du diamètre des nanotubes (qui détermine la densité surfacique en nanotubes) : dans l'échantillon de référence et l'échantillon à caractériser le diamètre moyen des nanotubes devrait être aussi proche que possible. On supposera alors que la différence en masse entre l'échantillon de référence et l'échantillon à caractériser, corrigée pour la différence entre les hauteurs du tapis de VACNT (longueur moyenne des VACNT) est due au carbone additionnel désorganisé. Une application concrète de cette méthode est décrite dans la section « Exemples » ci-dessous.

3. Description de supercondensateurs incorporant des tapis de VACNT avec du carbone additionnel désorganisé

Pour réaliser un supercondensateur, il est nécessaire d'assembler au moins deux électrodes séparées électriquement par un matériau non conducteur d'électrons (séparateur et électrolyte liquide). Cette étape se nomme l'assemblage. Il existe plusieurs techniques d'assemblage dont le choix dépend des caractéristiques désirées pour le supercondensateur. Celles mises en oeuvre pour nos produits seront définis dans la suite du document.

Pour que tout assemblage soit optimal, il est nécessaire de veiller à un équilibrage correct de l'(ou des) électrode(s) électrodes négatives et positives : c'est-à-dire que les quantités de charge $Q_i$ soient les plus élevées possibles et égales pour les deux types d'électrodes selon les paramètres électrochimiques du système visés ($\Delta E_{syst}$). L'équilibrage suit l'équation : $\Delta E. \times C_{m-} \times m_- = \Delta E_+ \times C_{m+} \times m_+$ où :

$\Delta E_i$    désigne la plage de tension de fonctionnement,
$C_{mi}$    désigne la capacité massique, et
$m_i$    désigne la masse de l'électrode i.

Comme les électrodes positives et négatives doivent être en regard, les surfaces d'électrodes doivent être identiques ou quasi identiques. La masse de matière active des électrodes est donc une fonction de l'épaisseur et de la densité du film composite et de la capacitance correspondante sur la zone de tension étudiée.

Pour l'assemblage, le séparateur peut typiquement être une membrane poreuse à base cellulosique, à base de polyéthylène ou polypropylène (Nafion®, Celgard®, ...), ou encore en fibre de verre. Afin d'obtenir une bonne valeur de puissance du supercondensateur, on préfère utiliser des séparateurs à membrane poreuse avec un électrolyte liquide.

Selon l'invention, l'assemblage peut être symétrique ou asymétrique. Dans un système symétrique, l'électrode négative est de nature et de masse identique (ou quasi identique) à celles de l'électrode positive. A contrario, pour un système asymétrique, l'électrode négative est de nature ou de masse différente de l'électrode positive. De préférence les deux électrodes sont à base de VACNT ; leur capacitance peut être identique ou différente. Si une électrode seulement comprend des VACNT, l'autre peut être en carbone activé par exemple.

Pour obtenir une capacité volumique maximale (à capacité du système désirée), il est nécessaire de maximiser la surface géométrique de contact entre les électrodes négatives et les électrodes positives, tout en minimisant le volume. Pour cela deux types d'assemblage différents peuvent être choisis : soit l'empilement des électrodes (qui implique une soudure commune aux électrodes de même polarité), soit l'enroulement des électrodes positive et négative sur un ou deux axes formant soit un système cylindrique soit un système prismatique enroulé.

Une fois l'assemblage des électrodes effectué, le système doit être encapsulé. Les électrodes et le séparateur sont typiquement placés dans une enceinte étanche, capable d'accueillir ledit électrolyte liquide. Cette enceinte peut être sélectionnée notamment dans le groupe formé par les poches plastiques, les coques rigides en polymère, les coques en tôle revêtue à l'intérieur par un film électriquement isolant, les coques en céramique, les coques en verre.

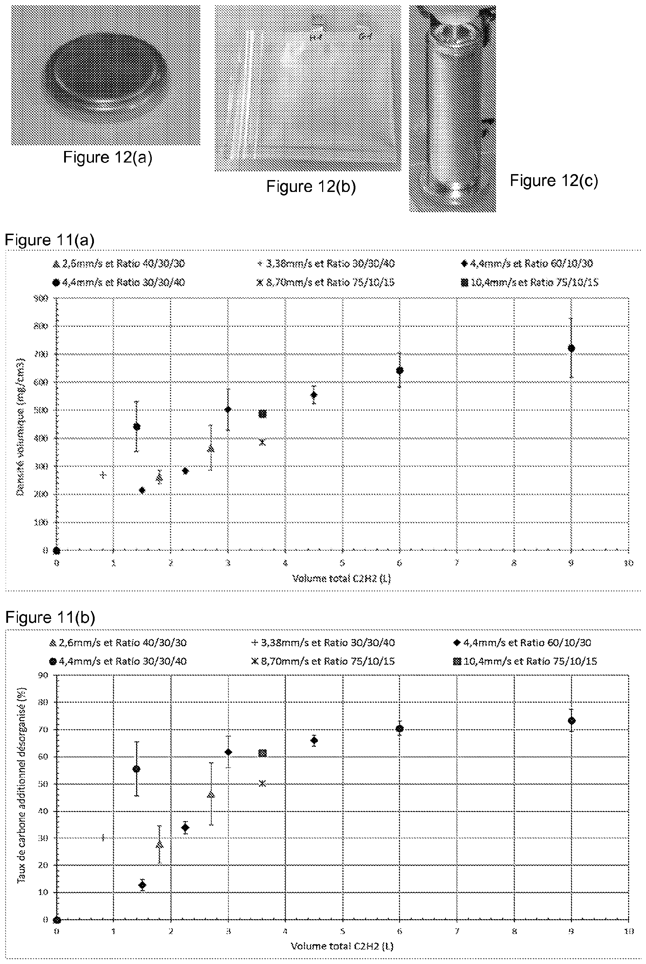

Cette étape consiste donc à insérer l'assemblage des électrodes et séparateurs dans une enceinte d'encapsulation (boitier rigide, poche souple, pile cylindrique à paroi métallique, pile bouton par exemple), de relier électriquement les électrodes aux terminaux du boitier, d'ajouter et de faire diffuser l'électrolyte dans les séparateurs et électrodes, et enfin de sceller ladite enceinte. Pour certains types de boitier (notamment pour les boîtiers à paroi métallique) il peut être nécessaire d'isoler le boitier du contact extérieur par l'ajout d'un revêtement isolant électrique. La figure 12 montre trois types d'enceintes utilisables dans le cadre de l'invention: l'enceinte de type pile bouton (figure 12(a)), l'enceinte de type poche (figure 12(b)), l'enceinte de type pile cylindrique (figure 12(c)).

Les électrolytes pour le cyclage de supercondensateurs utilisés sont des électrolytes liquides. On peut utiliser notamment une solution électrolytique contenant, comme solvant, un solvant protique ou un solvant aprotique, ou encore un liquide ionique, qui peut être protique ou aprotique.

Par « solvant protique », on entend, dans le cadre de la présente invention, un solvant qui comporte au moins un atome d'hydrogène susceptible d'être libéré sous forme de proton. Le solvant protique est avantageusement choisi dans le groupe constitué par l'eau, l'eau désionisée, l'eau distillée, acidifiées ou basiques, l'acide acétique, les solvants hydroxylés comme le méthanol et l'éthanol, les glycols liquides de faible poids moléculaire tels que l'éthylène glycol, et leurs mélanges.

Par « solvant aprotique », on entend, dans le cadre de la présente invention, un solvant qui n'est pas susceptible de libérer un proton ou d'en accepter un dans des conditions non extrêmes. Le solvant aprotique est avantageusement choisi parmi les alcanes halogénés tels que le dichlorométhane ; la diméthylformamide (DMF) ; les cétones tels que l'acétone ou la 2-butanone ; l'acétonitrile ; le tétrahydrofuranne (THF) ; la N-méthylpyrrolidone (NMP) ; le diméthyl sulfoxyde (DMSO) et leurs mélanges ; le carbonate de propylène le carbonate d'éthylène, le diméthylcarbonate et leurs mélanges, les lactones (tel que le $\gamma$-butyrolactone).

De plus, le solvant utilisable dans le cadre de la présente invention peut être un mélange d'au moins un solvant protique avec au moins un solvant aprotique.

La solution électrolytique utilisable dans le cadre de la présente invention comprend, en plus d'un solvant tel que précédemment défini, un électrolyte sous forme d'un sel dissous dans le solvant. L'anion de ce sel peut être choisi parmi les anions inorganiques tels que $F^-$, $Br$, $Cl^-$, $I$, $HCO_3^-$, $H_2PO_4^-$, $Cr_2O_4^{3-}$, $BF_4^-$, $PF_6^-$, ou $N(CN)_2^-$ ; les anions organiques (décrits ci-dessous) ; les anions polymériques et les anions biologiques. Le cation de ce sel peut être un cation métallique tels que $Li^+$, $Na^+$, $Mg^{2+}$, $Cu^{2+}$, $Zn^{2+}$ et $Al^{3+}$ ou les cations organiques. Parmi les anions organiques mentionnés ci-dessus on peut citer notamment $RSO_3^-$, $RCOO^-$ (où R est un groupe alkyl ou phényle, possiblement substitué) ; $(CF_3)_2PF_4$, $(CF_3)_3PF_3$, $(CF_3)_4PF_2^-$, $(CF_3)_5PF^-$, $(CF_3)_6P^-$, $(CF_2SO_3^-)2$, $(CF_2CF_2SO_3^-)_2$, $(CF_3SO_2^-)_2N^-$, $CF_3CF_2(CF_3)_2CO^-$, $(CF_3SO_2^-)_2CH^-$, $(SF_5)_3C^-$, $(CF_3SO_2SO_2)_3C^-$, $[O(CF_3)_2C_2(CF_3)_2O]_2PO$, $CF_3(CF_2)_7SO_3^-$, bis(trifluoro-méthanesulfonyl) amide, bis(fluorosulfonyl) amide.

Tout liquide ionique (protique ou aprotique) contenant un cation associé à un anion est utilisable dans le cadre de la présente invention. Parmi ces liquides ioniques aprotiques, on peut citer des liquides ioniques contenant des ions ammonium quaternaire tels que les ions 1-éthyl-3-méthyl imidazolium, 1-méthyl-3-propyl imidazolium, 1-méthyl-3- isopropyl imidazolium, 1-butyl-3-méthyl imidazolium, 1 éthyl-2, 3-diméthyl imidazolium, 1-éthyl-3,4-diméthyl imidazolium, N-propyl pyridinium, N-butyl pyridinium, N-tert-butyl pyridinium, N-tert-butanol-pentyl pyridinium, N-méthyl-N-propylpyrrolidinium, N-butyl-N-méthyl-pyrrolidinium, N-méthyl-N-pentyl pyrrolidinium, N-propoxyéthyl-N-méthyl pyrrolidinium, N-méthyl-N- propyl piperidinium, N-méthyl-N-isopropyl piperidinium, N-butyl-N-méthyl piperidinium, N-N-isobutylméthyl piperidinium, N-sec-butyl-N-méthyl piperidinium, N-méthoxy-N-éthylméthyl piperidinium, et N-éthoxyéthyl-N-méthyl piperidinium. On peut également citer les liquides ioniques contenant des ions ammonium tels que les ions butyl-N-N-triméthyl ammonium, N-éthyl-N,N-diméthyl-N-propyl ammonium, N-butyl-N-éthyl-N,N-diméthyl ammonium, N,N,N-triméthyl ammonium, associés à tout anion tels que les anions tétrafluoroborate ($BF_4^-$) , hexafluorophosphate ($PF_6^-$) , bis (trifluorométhane-sulfonyl) amide ($TFSI^-$) ou bis (fluorosulfonyl) amides ($FSI$).

Un électrolyte organique qui convient particulièrement bien dans le cadre de la présente invention est le tétraéthylammonium tétrafluoroborate (de préférence à environ 1 mol/L) dans l'acétonitrile.

Dans un mode de réalisation particulier on utilise un électrolyte qui comprend un liquide ionique comprenant au moins un cation sélectionné dans le groupe formé par les dérivés du pyridine, pyridazine, pyrimidine, pyrazine, imidazole, pyrazole, thiazole, oxazole, triazole, ammonium, pyrrolidine, pyrroline, pyrrole, et piperidine, et au moins un anion sélectionné dans le groupe formé par $F^-$, $Cl^-$, $Br$, $I^-$, $NO3^-$, $N(CN)_2^-$, $BF_4^-$, $ClO_4^-$, $PF_6^-$, $RSO_3^-$, $RCOO^-$, où R est un groupe alkyl ou phénole, $(CF_3)_2PF_4^-$, $(CF_3)_3PF_3$, $(CF_3)_4PF_2^-$, $(CF_3)_5PF^-$, $(CF_3)_6P^-$, $(CF_2SO_3^-)_2$, $(CF_2CF_2SO_3^-)_2$, $(CF_3SO_2^-)_2N^-$, $CF_3CF_2(CF_3)_2CO^-$, $(CF_3SO_2^-)_2CH^-$, $(SF_5)_3C$, $(CF_3SO_2)_3C$, $[O(CF_3)_2C_2(CF_3)_2O]_2PO^-$, $CF_3(CF_2)_7SO_3^-$, 1-éthyl-3-méthymimidazole bis(trifluoro-méthylsulfonyl)imide ($[EMIM][Tf_2N]$).

Une fois l'électrolyte ajouté et diffusé dans l'assemblage électrodes/séparateurs, l'enceinte est scellée soit par collage thermoplastique (cas des pouch-cells) soit par scellage mécanique (recouvrement métallique et plastique ou soudage métallique, cas des piles bouton et boitiers cylindriques). Pour certains types de boitier (pile cylindrique à corps métallique, par exemple), il peut être nécessaire d'isoler le boitier du contact extérieur (pour des raisons sécurité électrique) par l'ajout d'un revêtement isolant électrique soit collant soit thermorétractable.

D'une manière générale, le procédé de fabrication d'un supercondensateur selon l'invention comprend les étapes suivantes :

1. Découpe des électrodes et séparateurs selon le type d'assemblage et de boitier d'encapsulation,
2. Soudage (de préférence à ultrasons ou par laser) de collecteurs de courant (tab) sur les électrodes,
3. Assemblage électrodes et séparateurs,
4. Soudage (de préférence à ultrasons ou par laser) des collecteurs de courant (tab) des électrodes aux borniers de l'enceinte (par exemple au couvercle du boitier),
5. Mise en place de l'assemblage électrodes/séparateurs dans le boitier (sachant que les étapes 4 et 5 peuvent être interverties),
6. Ajout et diffusion de l'électrolyte dans l'assemblage électrodes/séparateurs,
7. Scellement de l'enceinte.

Le supercondensateur selon l'invention comprend au moins une électrode, et de préférence toutes les électrodes, en VACNT présentant du carbone additionnel désorganisé. Les inventeurs ont constaté que l'utilisation de telles électrodes conduit à une augmentation significative de la capacitance, comparé à un supercondensateur avec une électrode similaire en VACNT mais sans carbone additionnel désorganisé. On entend ici par « électrode similaire » une électrode en VACNT de même longueur moyenne, et de même densité surfacique de nanotubes, la seule différence étant la présence ou absence de carbone additionnel désorganisé. Cette augmentation est significative si le composite comprend au moins 10 % de carbone additionnel désorganisé, par rapport à la masse des nanotubes de carbone ; de préférence cette teneur est d'au moins 30%, et encore plus préférentiellement d'au moins 50%. L'augmentation n'est plus observée au-delà de 90%, et de préférence on ne dépasse pas les 80%.

Selon l'invention on peut fabriquer des supercondensateurs capables de stocker une énergie d'au moins 0,8

Wh/m$^2$, de préférence d'au moins 1 Wh/m$^2$ et encore plus préférentiellement d'au moins 2 Wh/m$^2$ pour une puissance comprise entre 0,01 et 1 kW/m$^2$.

**Exemples**

Les exemples qui suivent illustrent des modes de réalisation de l'invention pour permettre à l'homme du métier d'exécuter l'invention. Ils décrivent également des modes de réalisations comparatifs.

1. Elaboration et caractérisation des tapis de VACNT

On a élaboré des tapis de VACNT dans trois types de réacteurs différents, par injection pulsée continue du précurseur de catalyseur (ferrocène dissout dans du toluène), la source de carbone était l'acétylène. Le principe de cette technique est décrit dans le document WO 2004/000727 (Commissariat à l'Energie Atomique et aux Energies Alternatives). Un premier réacteur (référence "Four 1") était un four tubulaire comportant dans une enceinte chauffée un tube en quartz de section circulaire de 330 mm$^2$ dans lequel se trouvait le substrat. Un second réacteur (référence "Four 2") était un four tubulaire comportant dans une enceinte chauffée un tube en quartz de section circulaire de 1 917 mm$^2$ dans lequel se trouvait le substrat. Ces deux fours étaient des fours de type batch. Le troisième réacteur (référence "Pilote") était un réacteur continu dans lequel une bande métallique peut défiler à travers une section rectangulaire de 9 525 mm$^2$ ; ce réacteur a été utilisé ici en mode statique (i.e. sans défilement, avec une zone réactionnelle de 1000 mm x 300 mm.

Les principaux paramètres des synthèses et résultats sont rassemblés dans le tableau 1 ci-dessous. La figure 1 montre de manière schématique le réacteur de type batch ("Four 1" et "'Four 2"). La zone de croissance optimale (homogène) était d'environ 170 mm x 15 mm pour le Four 1, et d'environ 300 mm x 30 mm pour le Four 2. Dans cette zone de croissance optimale on peut disposer différents types de substrats, tel qu'une bande d'aluminium ou des pastilles d'aluminium.

Sauf mention contraire, tous les résultats donnés dans la partie "Exemples" concernent les fours de type batch.

Tableau 1 : Paramètres de synthèses de VACNT sur substrat d'aluminium

| Référence réacteur et échantillons | F1 NI-836 | F1 NI-766 | F1 NI-842 | F2 NGI-1067 | F2 NGI-1050 | P S01 R170 7041 C1C3 | F2 NGI-1086 | F2 NGI-1088 | F2 NGI-1085 | F2 NGI-1081 | F2 NGI1113 | F2 NGI-1091 | F2 NGI-1119 | F2 NGI-1045 | F2 NGI1046 | F2 NGI-1057 | F2 NGI-1118 | F2 NGI-1051 | F2 NGI-1060 |
|---|---|---|---|---|---|---|---|---|---|---|---|---|---|---|---|---|---|---|---|
| Débit Ar [L/min] | 0,150 | 0,080 | 0,020 | 0,250 | 0,275 | 1,200 | 0,300 | | | | 0,15 | | | 0,12 | | 0,2 | 0,9 | 0,3 | 0,15 |
| Débit $H_2$ [L/min] | 0,020 | 0,060 | 0,020 | 0,100 | 0,75 | 0,900 | 0,05 | | | | 0,15 | | | 0,09 | | 0,15 | 0,12 | 0,05 | 0,15 |
| Débit $C_2H_2$ [L/min] | 0,030 | 0,060 | 0,027 | 0,150 | 0,150 | 0,900 | 0,150 | | | | 0,2 | | | 0,09 | | 0,15 | 0,18 | 0,15 | 0,20 |
| Débit Total [L/min] | 0,200 | 0,200 | 0,067 | 0,500 | 0,500 | 3,000 | 0,500 | | | | | | | 0,300 | | 0,50 | 1,20 | 0,500 | |
| Ratio de gaz : $Ar/H_2/C_2H_2$ | 75/10/15 | 40/30/30 | 30/30/40 | 50/20/30 | 55/15/30 | 40/30/30 | 60/10/30 | | | | 30/30/40 | | | 40/30/30 | | 75/10/15 | 60/10/30 | 30/30/40 | |
| Vitesse de passage à 20°C [mm/s] | 10,1 | 16,6 | 3,38 | 4,4 | | 5,25 | 4,4 | | | | | | | 2,6 | | 4,4 | 10,4 | 4,4 | |
| Durée de Synthèse [min] | 27,5 | 20 | 30 | 30 | 30 | 60 | 10 | 15 | 20 | 30 | 7 | 30 | 45 | 20 | 30 | 30 | 20 | 30 | 30 |
| Masse de liquide injectée [mg/min] | 15,3 | 25 | 73 | 53,3 | 76,7 | 800 | 70 | 73,3 | 65 | 53,3 | 54,3 | 63,3 | 57,8 | 70 | 70 | 100 | 52,5 | 53,3 | 100 |
| Rapport Fe/C [%] | 1,01 | 1,00 | 0,62 | 0,77 | 1,01 | 1,44 | 0,94 | 0,98 | 0,89 | 0,77 | 0,62 | 0,70 | 0,65 | 1,33 | 1,33 | 1,2 | 0,66 | 0,77 | 0,99 |
| Carbone additionnel désorganisé [%] | 0 | 0 | 0 | 65 | 56 | 58 | 13 | 34 | 62 | 66 | 56 | 71 | 73 | 28 | 46 | 50 | 61 | 66 | 64 |

EP 3 676 221 B1

15

| Référence réacteur et échantillons | F1 NI-836 | F1 NI-766 | F1 NI-842 | F2 NGI-1067 | F2 NGI-1050 | P S01 R170 7041 C1C3 | F2 NGI-1086 | F2 NGI-1088 | F2 NGI-1085 | F2 NGI-1081 | F2 NGI1113 | F2 NGI-1091 | F2 NGI-1119 | F2 NGI-1045 | F2 NGI1046 | F2 NGI-1057 | F2 NGI-1118 | F2 NGI-1051 | F2 NGI-1060 |
|---|---|---|---|---|---|---|---|---|---|---|---|---|---|---|---|---|---|---|---|
| Volume total $C_2H_2$ [L] | 0,83 | 1,20 | 0,81 | 4,50 | 4,50 | 54 | 1,50 | 2,25 | 3,00 | 4,50 | 1,40 | 6,00 | 9,00 | 1,80 | 2,70 | 4,50 | 3,60 | 4,50 | 6,00 |
| Volume total $C_2H_2$ normalisé [mL/mm$^2$] | 2,52 | 3,64 | 2,45 | 2,35 | 2,35 | 5,67 | 0,78 | 1,17 | 1,56 | 2,35 | 0,73 | 3,13 | 4,69 | 0,94 | 1,41 | 2,35 | 1,88 | 2,35 | 3,13 |
| Substrat | AlMg1 | | | | | AlMn 1 | AlMg1 | | | | | | | | | | | | |

Toutes ces synthèses ont été effectuées à une température de consigne de 615 °C, à pression atmosphérique.

La concentration toluène/ferrocène était de 10 % massiques pour toutes ces synthèses.

La vitesse de passage à 20 °C se réfère à la section du tube quartz sans porte substrat.

Les figures 2 et 3 montrent des exemples de croissances de VACNT sur un substrat en alliage d'aluminium (AlMg1) pour deux conditions de procédés. Dans les deux cas, les nanotubes de carbone se présentent sous la forme de tapis alignés verticalement. Plus précisément, la figure 2 montre des micrographies MEB à quatre grandissements différents de l'échantillon NI-836. On note que sur la figure 2(c) qu'il est possible de distinguer les nanotubes individuels : l'espace entre deux tubes est visible.

La figure 3 montre des micrographies MEB à trois grandissements différents de l'échantillon NGI-1067. On note sur la figure 3(c) que les nanotubes présentent un dépôt de surface de carbone additionnel dans l'espace inter-tube rendant difficile l'observation des nanotubes de carbone individuellement. La figure 3(d), obtenue par MET à plus fort grandissement, confirme la présence d'un tel dépôt sur la surface externe des nanotubes ; un tel dépôt de surface n'est pas observé sur la figure 2(d), obtenue au même grandissement sur un échantillon préparé d'une manière différente (voir les exemples).

La figure 4 montre le carbone additionnel qui a été caractérisé en plus grand détail par microscopie électronique à transmission à haute résolution (HR-MET), voir la figure 4(a). La figure 4(b) montre la structure d'un nanotube de carbone individuel, qui met en évidence la présence de plans de graphène, chacun étant plus ou moins bien structuralement organisés comme en témoigne leur tortuosité, et l'ensemble de ces plans présentent une organisation à longue distance.

Les figure 4(c) et 4(d) montrent que le carbone additionnel est composé de plusieurs ensembles d'un petit nombre de plans de graphène empilés (appelés encore : unités structurales de base (USB)) et organisés à courte distance, ces USB étant aléatoirement réparties entre elles, ce qui reflète une faible organisation à longue distance. Ainsi ce carbone additionnel peut être qualifié de carbone désorganisé présentant un degré d'organisation semi-graphitique contrairement à un carbone désorganisé qui serait complètement amorphe et qui ne comporterait donc aucune unité graphitisée, c'est-à-dire aucune USB.

On a caractérisé la décomposition de VACNT par analyse thermiques gravimétrique (ATG) réalisé sous air sec avec une rampe de 10°C/min, pour essayer de déterminer la quantité de carbone additionnel. Une courbe typique est montrée sur la figure 5 pour deux échantillons (repères 1 et 2) préparés en mode batch qui présente des taux de carbone additionnel désorganisé différents : le taux de l'échantillon 1 est supérieur à celui de l'échantillon 2.

On constate que les deux courbes ne font apparaître qu'une seule perte de masse continue mais que la température de début de dégradation thermique est différente en fonction de l'échantillon. La température de début de décomposition est plus faible pour l'échantillon 1 qui a un taux de carbone additionnel désorganisé le plus élevé, que pour l'échantillon 2. De plus, on constate que le taux de fer des deux échantillons est très proche : 1,74 % pour l'échantillon 1 et 1,86 % pour l'échantillon 2. On peut donc éliminer l'effet de la décomposition catalytique par le fer sur la différence de température de début de dégradation. On peut donc émettre l'hypothèse que la température de début de décomposition est liée au taux de carbone additionnel désorganisé. Cependant la courbe ATG sous air ne permet pas d'identifier la présence de deux pertes de masse distinctes: l'une qui serait relative à la décomposition du carbone désorganisé et l'autre qui serait relative à la décomposition du carbone des nanotubes de carbone ; ceci est en adéquation avec les travaux de Yusada (cité ci-dessus) qui montrent qu'un carbone désorganisé présentant un degré d'organisation semi-graphitique et présent au sein des tapis de nanotubes n'engendre pas de perte de masse spécifique lorsque l'on enregistre sa courbe ATG sous air.

La figure 6 montre des micrographies MEB des échantillons 1 (figure 6(a)) et 2 (figure 6(b)). On voit directement le fort taux de carbone additionnel désorganisé de l'échantillon 1 comparé à l'échantillon 2 où l'on distingue plus facilement l'espace inter-tubes.

On décrit maintenant l'estimation du taux de carbone additionnel désorganisé. Il convient de noter que dans les conditions expérimentales étudiées on n'a pas trouvé de quantité détectable de carbone additionnel désorganisé pour un volume total de $C_2H_2$ délivré au cours de la réaction de synthèse inférieur à 1,3 L ; pour ces échantillons on a assigné la valeur de zéro au taux de carbone additionnel désorganisé.

Selon l'invention, le taux de carbone additionnel désorganisé est estimé par une différence de masse entre un échantillon de référence sans carbone additionnel désorganisé et un échantillon avec carbone additionnel désorganisé. L'échantillon de référence est un échantillon ne contenant pas de carbone additionnel désorganisé, ce qui a été vérifié par MEB et MET comme montré sur les figures 2(c) et 2(d). Cet échantillon présente une masse surfacique de 1,11 mg/cm$^2$ et une hauteur de VACNT de 59 $\mu$m. Le diamètre externe moyen des nanotubes contenu dans l'échantillon est de l'ordre de 9 nm et de diamètre interne moyen est de l'ordre de 4 nm. Pour un échantillon de VACNT toujours sans carbone additionnel désorganisé mais plus épais et pour lequel les VACNT présentent le même diamètre, il est possible de calculer la masse surfacique qui est simplement proportionnelle au rapport entre les hauteurs des deux échantillons de VACNT. Ce calcul est réaliste car on vérifie que le diamètre externe moyen des nanotubes de carbone, et donc la densité en nanotubes de carbone, est comparable pour les deux échantillons. En effet, le diamètre externe des nanotubes de carbone est admis comme étant équivalent au diamètre des particules catalytiques présentes à la base des nanotubes de carbone et servant à leur croissance. Or dans le cas de la méthode de synthèse utilisée dans le cadre de la présente invention, la formation des particules catalytiques résulte d'un mécanisme de germination homogène en phase gazeuse, et compte tenu de la sursaturation en vapeur de fer, la densité en nanotubes de carbone atteinte est toujours maximale et dépend de la taille des particules catalytiques (voir Castro et al. Carbon 61, 2013, 581-594). Ainsi pour deux échantillons différents et synthétisés dans des conditions de température identiques, si l'on vérifie que le diamètre des nanotubes de carbone est équivalent, on peut supposer que la densité en nanotubes de carbone dans l'échantillon est équivalente.

Prenons maintenant le cas d'un tapis de VACNT contenant du carbone additionnel désorganisé observé en MEB et MET comme montré sur les figures 4(b) et 4(d). On vérifie au préalable que le diamètre des nanotubes dans cet échantillon est comparable à celui des nanotubes dans l'échantillon sans carbone additionnel désorganisé, ce qui permet de valider l'hypothèse que les tapis de VACNT avec ou sans carbone additionnel désorganisé présentent une densité en nanotubes de carbone comparable. Ainsi, la masse surfacique mesurée sur le tapis présentant du carbone additionnel désorganisé résulte de la somme de la masse surfacique du tapis sans carbone additionnel désorganisé et de la masse surfacique du carbone additionnel désorganisé. Connaissant la hauteur du tapis avec carbone additionnel désorganisé, on peut calculer la masse surfacique qu'aurait ce même tapis sans carbone additionnel désorganisé (voir paragraphe précédent) que l'on déduit de la masse surfacique du tapis avec carbone additionnel désorganisé, ce qui permet de remonter à la masse de carbone additionnel désorganisé.

Le calcul utilise les paramètres suivants :

- $M_{réf}$ = 1,11 (mg/cm$^2$) : Masse surfacique du tapis de VACNT de référence sans carbone additionnel désorganisé
- Diamètre externe des NTC = 9 nm
- $h_{réf}$ = 59 $\mu$m : Hauteur du tapis de VACNT de référence mesurée
- $M_{mes}$ : Masse surfacique (mg/cm$^2$) du tapis de VACNT mesuré
- $h_{mes}$ : Hauteur ($\mu$m) du tapis de VACNT mesuré
- $M_{est}$ : Masse surfacique estimée du tapis de VACNT (mg/cm$^2$), s'il n'y avait pas de carbone additionnel désorganisé
- % C désorganisé : Pourcentage de carbone additionnel désorganisé estimé au sein du tapis de VACNT.

Le taux de carbone additionnel désorganisé est estimé à partir des formules suivantes :

$$M_{est} = (M_{réf} \times h_{mes}) / h_{réf}$$

$$\% \text{ C désorganisé} = (M_{mes} - M_{est}) / M_{mes} \times 100$$

Pour ces mesures et calculs on ne tient pas compte du substrat sur lequel sont déposés les VACNT.

Les résultats ont été rassemblés dans le tableau 3 ci-dessous.

On a également caractérisé les tapis de VACNT par spectroscopie Raman avec les conditions suivantes : Longueur d'onde : 532 nm ; Puissance laser = 0,2 mW ; Gamme : 800-3500 cm$^{-1}$ ; Temps d'exposition : 10 s ; 1 accumulation et l'irradiation par le faisceau laser a été dirigé sur la surface supérieure du tapis. La figure 7 montre un spectre Raman typique d'un échantillon de VACNT selon l'invention avec 33 % de carbone additionnel désorganisé. La figure 8 montre des paramètres dérivés de la largeur de certaines bandes du spectre Raman pour différents échantillons de tapis de VACNT présentant un taux de carbone additionnel désorganisé différent. Plus précisément, la figure 8(a) montre la largeur de la bande D (points circulaires) et le rapport des intensités entre la bande D3 et la bande G (points triangulaires) ;

On observe une augmentation de la bande D et du rapport ID3/IG en fonction du pourcentage de carbone désorganisé, de plus on a la même tendance avec le rapport ID3/IG. La figure 8(b) montre le rapport entre la largeur de la bande D et la largeur de la bande G qui montre la même tendance. Les différents paramètres tels que la bande D ; ID3/IG ; rapport des largeurs des bandes D et G évalués par Raman permettent d'observer la présence du carbone additionnel désorganisé au sein d'un tapis de VACNT.

On a également déterminé la surface spécifique des tapis de VACNT par la technique BET (Brunauer-Emett-Teller), connue de l'homme du métier. Le tableau 2 montre des résultats obtenus pour deux échantillons présentant un taux de carbone additionnel désorganisé différent. Les résultats montrent une diminution de la surface spécifique avec l'augmentation du taux de carbone additionnel désorganisé.

Tableau 2

| Echantillon | Hauteur moyenne VACNT [$\mu$m] | Densité volumique [mg/cm$^3$] | % carbone désorganisé | Surface spécifique BET [m$^2$/g] |
|---|---|---|---|---|
| NGI-1077 | 71 | 718 | 74 | 312 |

(suite)

| Echantillon | Hauteur moyenne VACNT [$\mu$m] | Densité volumique [mg/cm$^3$] | % carbone désorganisé | Surface spécifique BET [m$^2$/g] |
|---|---|---|---|---|
| NGI-1116 | 71 | 283 | 36 | 365 |

On a exploré l'effet des différents paramètres de synthèse du procédé sur les propriétés des VACNT obtenus (et en particulier sur le taux de carbone additionnel désorganisé). Toutes les caractérisations des tapis résultent d'une moyenne sur la zone homogène du four de réaction.

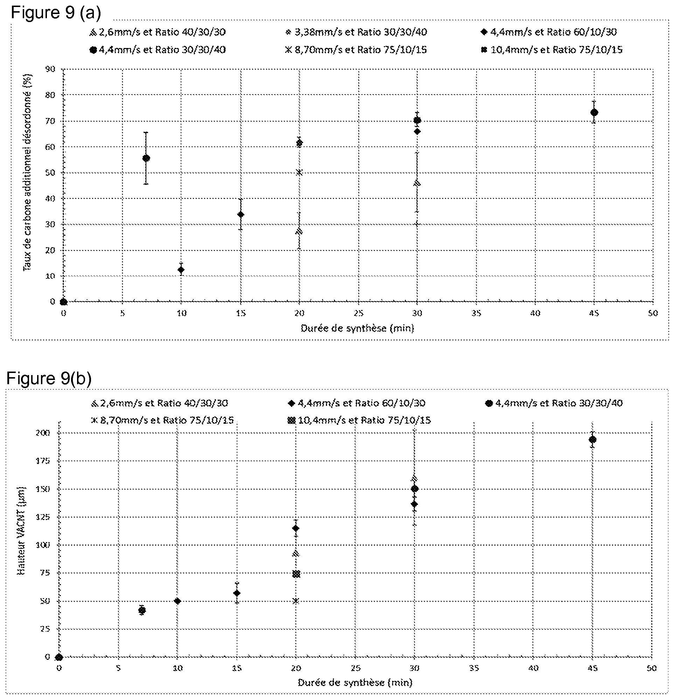

La figure 9(a) montre le taux de carbone additionnel désorganisé en fonction de la durée de la synthèse dans un réacteur de type batch. Trois compositions du flux de gaz (ratios Ar/H$_2$/C$_2$H$_2$) sont représentés : 60/10130 ; 40/30/30 ; 30/30/40. On observe une augmentation du taux de carbone additionnel désorganisé avec la durée, quel que soit la vitesse de passage du gaz et la composition du flux de gaz. La figure 9(b) montre la hauteur des tapis de VACNT en fonction de la durée de la synthèse, pour les mêmes conditions de synthèse que la figure 9(a).

D'une manière générale, les inventeurs constatent que dans un réacteur de type batch, le taux de carbone additionnel désorganisé augmente avec le temps de synthèse quel que soit le débit total et le ratio des gaz. Ce taux augmente avec la teneur en hydrogène ainsi qu'avec la teneur en acétylène. En revanche ce taux ne dépend pas du débit total.

Le premier paramètre clé pour contrôler le taux de carbone additionnel désorganisé dans le procédé selon l'invention est le volume total d'acétylène injecté (Vol tot C$_2$H$_2$) dans le réacteur. Le volume total d'acétylène injecté est calculé à partir du débit d'acétylène multiplié par la durée de synthèse comme dans la référence Yasuda. La figure 11(a) montre que la densité volumique (masse surfacique multipliée par la hauteur VANT) est très dépendante du volume total d'acétylène injecté, mais assez peu de la vitesse de passage.

La figure 11(b) montre que le taux de carbone additionnel désorganisé est très dépendant de la quantité d'acétylène : plus la quantité d'acétylène est grande et plus il est favorable à créer du carbone additionnel désorganisé. La gamme de volume total de C$_2$H$_2$ injecté entre 0 et 10 L permet de contrôler le taux de carbone additionnel désorganisé entre 0 et 90%. Préférentiellement pour une gamme entre 1,2 et 9 L permet de contrôler le taux de carbone additionnel entre 10 et 80 %.

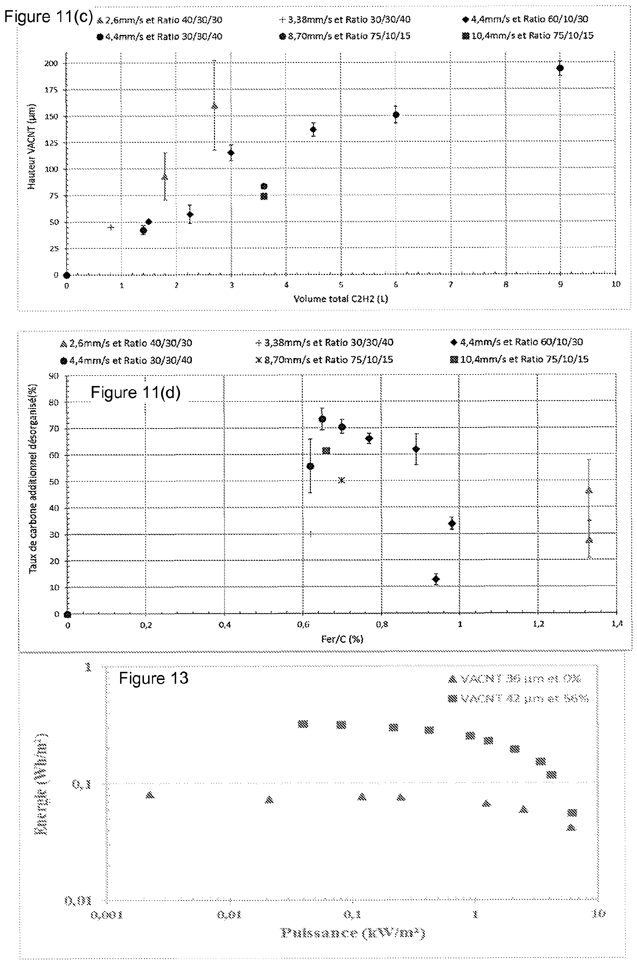

On note que la hauteur du tapis de VACNT augmente avec la quantité d'acétylène injecté (figure 11(c)). La croissance n'est pas limitée par la durée car dans le procédé selon l'invention le catalyseur est injecté de manière quasi-continue (de préférence par impulsions périodiques très rapprochées), ce qui évite l'arrêt de la croissance des nanotubes par manque de catalyseur. De plus, pour un volume total C$_2$H$_2$ par exemple autour de 3 L, une faible vitesse de passage) (par exemple 2,6 mm/s) permet d'obtenir une vitesse de croissance des VACNT plus grande. Cela veut dire que le rendement de la réaction de dépôt de VACNT augmente avec le temps de séjour des espèces réactionnelles dans la zone de dépôt du réacteur. On observe également que la formation du carbone additionnel désorganisé ne modifie pas la croissance des VACNT.

Le deuxième paramètre clé pour contrôler le taux de carbone additionnel désorganisé dans le procédé selon l'invention est la quantité de catalyseur ; si le catalyseur est le fer (typiquement apporté sous la forme de ferrocène), un paramètre critique est le taux de Fe/C. Ce taux correspond à la quantité de catalyseur injecté (dans le cas où le catalyseur est du fer), sur la quantité totale de carbone injecté, sachant que cette quantité de carbone injecté comprend la quantité de C$_2$H$_2$ et la quantité de toluène. La figure 11d montre que le taux de carbone additionnel désorganisé diminue avec l'augmentation de taux de Fe/C pour des vitesses de passage entre 4,4 mm/s et 10,4 mm/s. Si le taux de Fe/C augmente cela indique une augmentation de la quantité de fer injecté qui favorise la décomposition catalytique du C$_2$H$_2$ pour la croissance de VACNT. Pour un taux de fer supérieur à 0,8%, on peut obtenir un taux de carbone additionnel désorganisé supérieur à 50% avec des vitesses de passage entre 4,4 mm/s et 10,4 mm/s. Pour un taux de fer supérieur à 0,8%, on peut obtenir un taux de carbone additionnel désorganisé inférieur à 50% avec des vitesses de passage entre 2,6 mm/s et 4,4 mm/s.

Cependant, pour une vitesse de passage faible, par exemple 2,6 mm/s, malgré un taux de Fe/C élevé (1,25 %) et une valeur de Vol tot C$_2$H$_2$ faible, en l'occurrence inférieure à 3 L, on observe un taux de carbone additionnel désorganisé entre 30 et 50 %, et il est possible que le temps de résidence des réactifs prenne le pas sur les paramètres Volume total C$_2$H$_2$ et Fe/C.

Sans vouloir être liés par une quelconque théorie les inventeurs pensent que la formation du carbone additionnel désorganisé est très dépendante du rapport Fe/C (et de la quantité de fer en l'occurrence) et de la quantité d'acétylène (qui est contrôlée par le débit, le taux de dilution et/ou la durée de synthèse) ; cela ressort d'une comparaison entre résultats obtenus au même volume d'acétylène. Dans une moindre mesure, elle est aussi dépendante de la vitesse de passage et donc du temps de séjour dans le réacteur. Ainsi, une quantité d'acétylène élevée, un rapport Fe/C faible et une vitesse de passage faible favorisent un fort taux de carbone additionnel désorganisé. En revanche, une quantité d'acétylène faible, un rapport Fe/C élevé et une vitesse de passage élevée favorisent un faible taux de carbone additionnel désorganisé, voire son absence.

## 2. Fabrication et caractérisation de supercondensateurs

Des supercondensateurs symétriques ont été fabriqué à partir des électrodes composées des matériaux d'électrodes décrits (VACNT selon l'invention ou carbone activé (abrégé CA) pour des essais comparatifs). Sauf indication contraire, les supercondensateurs ont été réalisés par assemblage de type symétrique de deux électrodes simples faces (sous forme de disque de diamètre 10 mm) à l'aide d'un séparateur à base cellulosique et d'un électrolyte de type tétraéthylammonium tétrafluoroborate à 1 mol/L dans l'acétonitrile. Ces assemblages d'électrodes ont été encapsulés dans un système de type Swagelok®.

Le tableau 3 ci-dessous présente les caractéristiques des VACNT des différentes synthèses.

Tableau 3 : Caractéristiques des VACNT

| Référence four et échantillons | Four 1 NI-836 | Four 1 NI-766 | Four 2 NGI-1067 | Four 2 NGI-1113 | Four 2 NGI-1050 | Pilote R1707041 C1C3 |
|---|---|---|---|---|---|---|
| Substrat | AIMg1 | | | | | AIMn1 |
| Hauteur moyenne VACNT [$\mu$m] | 105 | 36 | 119 | 42 | 152 | 94 |
| Masse surfacique moyenne [mg/cm$^2$] | 1,04 | 1,00 | 6,64 | 1,85 | 6,83 | 4,26 |
| Taux de Carbone additionnel désorganisé moyen [%] | 0 | 0 | 65 | 56 | 56 | 58 |

## 2.1 Comparaison entre des électrodes en VACNT avec et sans carboné additionnel désorganisé

La figure 13 représente un diagramme de Ragone à 2,5 V d'un supercondensateur utilisant un électrolyte 1M ET$_4$N BF$_4$ dans l'acétonitrile et des deux électrodes formées de tapis de VACNT d'une épaisseur de 46 $\mu$m et 36 $\mu$m. L'intensité du courant varie entre 1 à 400 mA/cm$^2$. Ce diagramme montre l'énergie (E) que peut stocker chaque matériaux (E=1/2 CV$^2$) en fonction de la puissance (P) des matériaux (P=E/t de décharge). On observe qu'avec 56 % de carbone additionnel désorganisé (échantillon NGI-1113 ; points carrés), le système stocke quatre fois plus d'énergie pour des faibles puissances qu'en l'absence de carbone additionnel désorganisé (échantillon NI-766, points triangulaires). Pour une forte puissance, il conserve toujours plus d'énergie qu'un système ne contenant pas de carbone additionnel désorganisé.

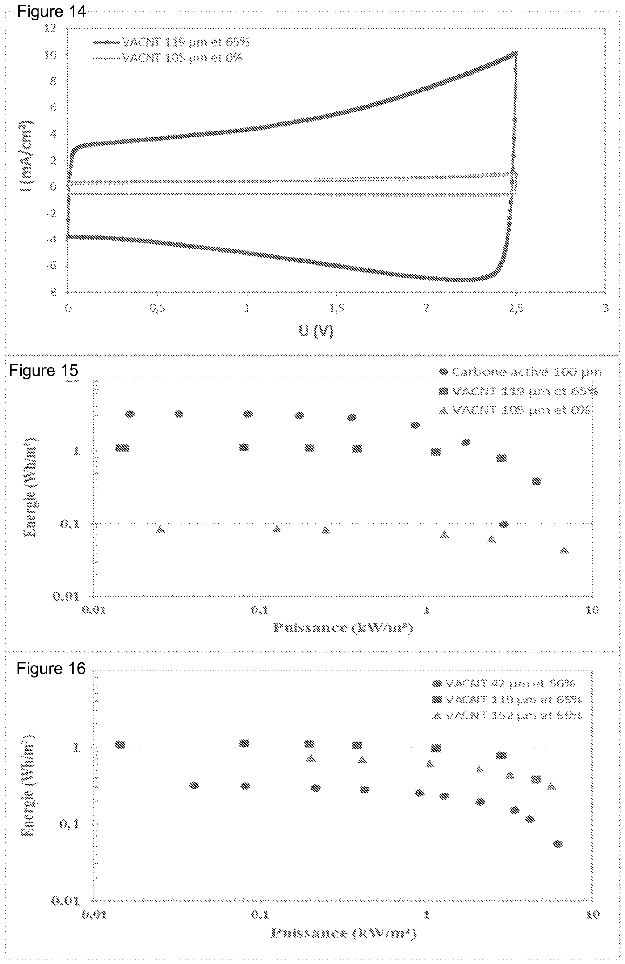

La figure 14 montre un voltamogramme comparatif de deux supercondensateurs (diamètre 10 mm) à 50 mV·s$^{-1}$, l'un comporte comme matériau d'électrodes un tapis de VACNT (référence NGI-1067) d'une épaisseur de 105 $\mu$m et 119 $\mu$m avec, respectivement, 0 % et 65 % de carbone additionnel désorganisé, l'autre un tapis de VACNT de même épaisseur mais sans carbone additionnel désorganisé (référence NI-836). L'aire comprise dans la courbe représente la quantité d'électricité stockée par chaque système. On observe que dans le système comportant des électrodes avec carbone additionnel désorganisé, l'aire est augmentée d'un facteur dix environ comparé à l'aire obtenu avec le système comportant des électrodes sans carbone additionnel désorganisé. Cela veut dire que le supercondensateur avec électrodes comportant du carbone additionnel désorganisé peut stocker environ dix fois plus d'énergie qu'un supercondensateur comportant des électrodes sans carbone additionnel désorganisé. La figure 15 est le diagramme de Ragone correspondant. Elle reflète l'augmentation de la capacité de stockage surfacique d'un facteur dix. De plus, pour des temps de charge et décharge élevés (forte puissance, 3 kW/m$^2$), ces supercondensateurs avec électrodes en VACNT avec carbone additionnel désorganisé permettent de stocker presque dix fois plus en énergie surfacique que les supercondensateurs avec des électrodes classiques à base de Carbone Activé.

## 2.2 Comparaison pour trois hauteurs différentes du tapis de VACNT

La figure 16 est un diagramme de Ragone qui compare les performances de supercondensateurs selon l'invention, à base de VACNT contenant du carbone additionnel désorganisé à hauteur de 56 % à 64 %, pour différentes épaisseur (hauteur) de tapis de VACNT. Lorsque l'on augmente la hauteur du tapis de 42 $\mu$m à 119 $\mu$m, on constate l'amélioration des performances en termes d'énergie stockée ; cet effet ne dépend pas de la puissance. En passant à une hauteur de 119 $\mu$m à 152 $\mu$m (référence NGI-1050), on observe une diminution de la quantité d'énergie par surface, même à faible vitesse.

2.3 Comparaison entre des supercondensateurs selon l'invention et des supercondesateurs commerciaux avec électrodes à base de carbone activé

Dans cet exemple on compare un supercondensateur prismatique symétrique selon l'invention (référence R1707041-C1-C3-Power) avec un supercondenateur du commerce (référence Maxwell 10F BCAP0010). Le supercondensateur selon l'invention comportait deux électrodes (C1 et C3) simple face (rectangles de dimensions 4 cm x 6 cm) à base de tapis de VACNT, séparées par un séparateur à base cellulosique, et un électrolyte de type tétraéthylammonium tétrafluoroborate à 1 mol/L dans l'acétonitrile. L'assemblage a été réalisé dans une poche souple (pouch cell). Les électrodes à base de tapis de VACNT présentaient du carbone additionnel, désorganisé ; elles provenaient du réacteur continu (Pilote S01). Le supercondensateur du commerce (référence Maxwell 10F BCAP0010) était de type enroulé cylindrique et présentait des électrodes en carbone activé.

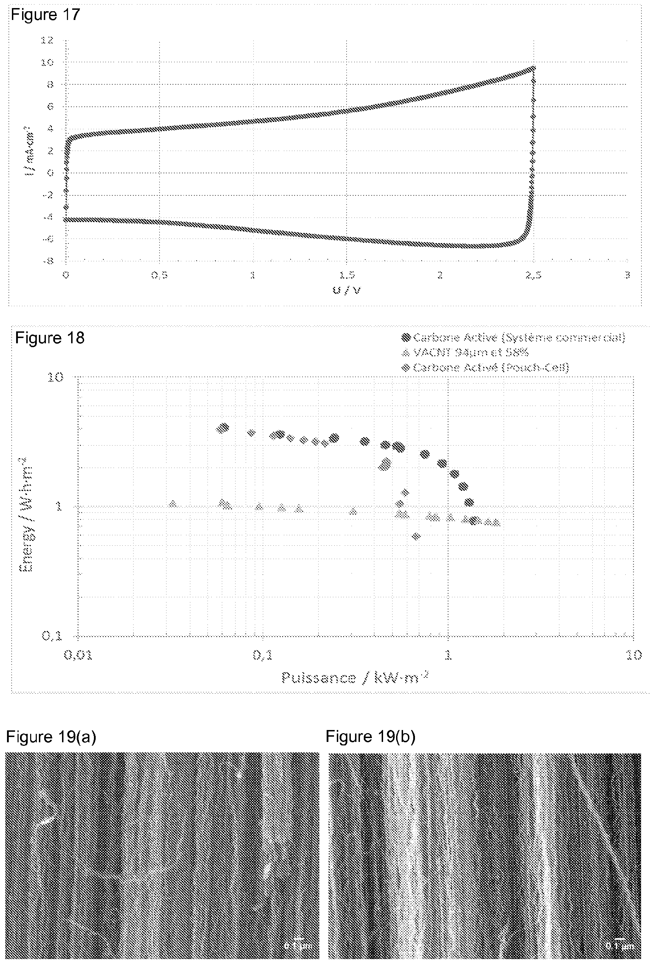

La figure 19(a) montre une micrographie MEB du tapis VACNT de l'électrode C1, la figure 19(b) montre une micrographie MEB du tapis VACNT de l'électrode C3.

Le dimensionnement du supercondensateur selon l'invention, et notamment le dimensionnement de ses électrodes, a été effectué de manière à obtenir, avec des électrodes en carbone activé, des performances comparables (et notamment une capacitance d'environ 10 F) à celles du supercondensateur du commerce choisi comme comparaison. L'épaisseur des couches actives de l'électrode était comprise entre 100 $\mu$m et 120 $\mu$m par face.

La figure 17 montre un voltamogramme à 50 mV·s$^{-1}$ du supercondensateur selon l'invention avec tapis VACNT et carbone additionnel désorganisé. La forme du voltammogramme et les valeurs de courant surfacique sont identiques à ceux d'un supercondensateur avec carbone additionnel désorganisé de plus petites dimensions (échantillon NGI-1067, figure 14). Cela montre accessoirement que le passage d'un four de type batch vers un four continu a conduit aux mêmes performances (la hauteur du tapis de VACNT était la même, à savoir 100 $\mu$m).

La figure 18 montre le diagramme de Ragone à 2,5 V comparatif des trois dispositifs, à savoir du dispositif selon l'invention (points circulaires), du dispositif commercial (points triangulaires, mesurés par les inventeurs dans les mêmes conditions que les autres dispositifs), et d'un dispositif selon l'état de la technique assemblé avec des électrodes en carbone activé dans une enceinte souple (pouch cell). L'intensité du courant varie entre 10 à 400 mA/cm$^2$. Ce diagramme montre l'énergie (E) que peut stocker chaque matériaux (E=1/2 CV$^2$) en fonction de la puissance (P) des matériaux (P=E/t de décharge). On observe qu'à forte puissance, le dispositif selon l'invention stocke plus d'énergie que le dispositif commercial. Les différences de puissances observées entre la figure 15 et 18 pour les mêmes types de matériaux peuvent s'expliquer par la configuration différente du système : la configuration Swagelok$^®$ (figure 15), exerçant une pression plus importante entre les deux électrodes du système que dans la configuration Pouch-Cell prismatique (figure 18).

Cette différence de pression est à l'origine d'une différence de résistances des supercondensateurs impactant leurs comportements à forte densité de courant.

**Revendications**

1. Dispositif supercondensateur, **caractérisé en ce qu'**il comprend au moins une électrode comportant

   o un composite comprenant des nanotubes de carbone verticalement alignés, appelés « VACNT », sur un substrat, ledit composite étant **caractérisé en ce qu'**il comprend du carbone additionnel désorganisé déposé sur la face extérieure des nanotubes, ou
   o un ensemble de nanotubes alignés et parallèles, obtenu à partir d'un composite comprenant des VACNT sur un substrat, ledit composite comprenant du carbone additionnel désorganisé déposé sur la face extérieure des nanotubes, ledit ensemble de nanotubes alignés et parallèles étant obtenu par enlèvement des nanotubes dudit substrat.

2. Dispositif supercondensateur selon la revendication 1, **caractérisé en ce que** ses deux électrodes comprennent un tel composite ou un tel un ensemble de nanotubes.

3. Dispositif supercondensateur selon la revendication 1 ou 2, **caractérisé en ce que** ledit composite comprend entre 10 % et 80 % de carbone additionnel désorganisé par rapport à la masse des nanotubes de carbone, et comprend de préférence au moins 30 %, et encore plus préférentiellement d'au moins 50 % de carbone additionnel désorganisé.

4. Dispositif supercondensateur selon la revendication 2 ou 3, dans lequel les deux électrodes sont contenues dans une enceinte, séparées par un séparateur, et ledit dispositif comprenant encore un électrolyte qui comprend au moins un anion, au moins un cation, et optionnellement un solvant.

5. Dispositif selon l'une quelconque des revendications 1 à 4, **caractérisé en ce que** ledit supercondensateur est capable de stocker une énergie d'au moins 0,8 Wh/m$^2$, de préférence d'au moins 1 Wh/m$^2$ et encore plus préférentiellement d'au moins 2 Wh/m$^2$ pour une puissance comprise entre 0,01 et 1 kW/m$^2$.

6. Dispositif selon l'un quelconque des revendications 4 ou 5, **caractérisé en ce que** ledit électrolyte est un liquide ionique contenant un cation associé à un anion, ou une solution électrolytique contenant un sel dissous dans un solvant, ledit solvant pouvant être un solvant protique ou un solvant aprotique ou un mélange d'au moins un mélange protique avec au moins un solvant aprotique,

ledit solvant aprotique étant de préférence choisi parmi les alcanes halogénés tels que le dichlorométhane ; la diméthylformamide (DMF) ; les cétones tels que l'acétone ou la 2-butanone ; l'acétonitrile ; le tétrahydrofuranne (THF) ; la N-méthylpyrrolidone (NMP) ; le diméthyl sulfoxyde (DMSO) et leurs mélanges ; le carbonate de propylène le carbonate d'éthylène, le diméthylcarbonate et leurs mélanges, les lactones et notamment le γ-butyrolactone, et/ou
ledit liquide ionique étant de préférence sélectionné dans le groupe formé par :

- les liquides ioniques contenant des ions ammonium quaternaire, et notamment les ions 1-éthyl-3-méthyl imidazolium, 1-méthyl-3-propyl imidazolium, 1-méthyl-3-isopropyl imidazolium, 1-butyl-3-méthyl imidazolium, 1 éthyl-2, 3-diméthyl imidazolium, 1-éthyl-3,4-diméthyl imidazolium, N-propyl pyridinium, N-butyl pyridinium, N-tert-butyl pyridinium, N-tert-butanol-pentyl pyridinium, N-méthyl-N-propylpyrrolidinium, N-butyl-N-méthyl-pyrrolidinium, N-méthyl-N-pentyl pyrrolidinium, N-propoxyéthyl-N-méthyl pyrrolidinium, N-méthyl-N- propyl piperidinium, N-méthyl-N-isopropyl piperidinium, N-butyl-N-méthyl piperidinium, N-N-isobutylméthyl piperidinium, N-sec-butyl-N-méthyl piperidinium, N-méthoxy-N-éthylméthyl piperidinium, et N-éthoxyéthyl-N-méthyl piperidinium ;
- les liquides ioniques contenant des ions ammonium tels que les ions butyl-N-N-triméthyl ammonium, N-éthyl-N,N-diméthyl-N-propyl ammonium, N-butyl-N-éthyl-N,N-diméthyl ammonium, N,N,N-triméthyl ammonium, associés à tout anion tels que les anions tétrafluoroborate (BF4-) , hexafluorophosphate (PF6-) , bis (trifluorométhane-sulfonyl) amide (TFSI-) ou bis (fluorosulfonyl) amides (FSI).

7. Dispositif selon l'une quelconque des revendications 4 à 6, **caractérisé en ce que** ledit électrolyte comprend un liquide ionique comprenant

- au moins un cation sélectionné dans le groupe formé par les dérivés du pyridine, pyridazine, pyrimidine, pyrazine, imidazole, pyrazole, thiazole, oxazole, triazole, ammonium, pyrrolidine, pyrroline, pyrrole, et piperidine, et
- au moins un anion sélectionné dans le groupe formé par F$^-$, Cl$^-$, Br, I$^-$, NO$_3^-$, N(CN)$_2^-$ , BF$_4^-$ , ClO$_4^-$, PF$_6^-$, RSO$_3^-$ , RCOO$^-$,
où R est un groupe alkyl ou phénol, (CF$_3$)$_2$PF$_4^-$, (CF$_3$)$_3$PF$_3$, (CF$_3$)$_4$PF$_2^-$, (CF$_3$)$_5$PF$^-$, (CF$_3$)$_6$P$^-$, (CF$_2$SO$_3^-$)2, (CF$_2$CF$_2$SO$_3^-$)$_2$, (CF$_3$SO$_2^-$)$_2$N$^-$, CF$_3$CF$_2$(CF$_3$)$_2$CO$^-$, (CF$_3$SO$_2$)$_2$ CH$^-$, (SF$_5$)$_3$C, (CF$_3$SO$_2$)$_3$C, [O(CF$_3$)$_2$C$_2$(CF$_3$)$_2$O]$_2$PO$^-$, CF$_3$(CF$_2$)$_7$SO$_3^-$, 1-éthyl-3-méthymimidazole bis(trifluoro-méthylsulfonyl)imide ([EMIM][Tf$_2$N]) ;

ladite solution électrolytique comprenant de préférence, en plus d'un solvant, un électrolyte sous forme d'un sel dissous dans le solvant, sachant que dans ce cas

- l'anion de ce sel est avantageusement choisi parmi

◦ les anions inorganiques tels que F$^-$, Br, Cl$^-$, I, HCO$_3^-$, H$_2$PO$_4^-$, Cr$_2$O$_4^{3-}$, BF$_4^-$, PF$_6^-$, ou N(CN)$_2^-$ ;
◦ les anions organiques, de préférence sélectionnés dans le groupe formé par : RSO$_3^-$ , RCOO$^-$ (où R est un groupe alkyl ou phényle, possiblement substitué) ; (CF$_3$)$_2$PF$_4$, (CF$_3$)$_3$PF$_3$, (CF$_3$)$_4$PF$_2^-$, (CF$_3$)$_5$PF$^-$, (CF$_3$)$_6$P$^-$, (CF$_2$SO$_3$)$_2$, (CF$_2$CF$_2$SO$_3^-$)$_2$, (CF$_3$SO$_2^-$)$_2$N$^-$, CF$_3$CF$_2$(CF$_3$)$_2$CO$^-$, (CF$_3$SO$_2^-$)$_2$CH$^-$, (SF$_5$)$_3$C$^-$, (CF$_3$SO$_2$SO$_2$)$_3$C$^-$, [O(CF$_3$)$_2$C$_2$(CF$_3$)$_2$O]$_2$PO, CF$_3$(CF$_2$)$_7$SO$_3^-$, bis(trifluoro-méthanesulfonyl) amide, bis(fluorosulfonyl) amide,
◦ les anions polymériques,
◦ les anions biologiques,

et/ou le cation de ce sel est un cation métallique, de préférence sélectionné dans le groupe formé par Li$^+$, Na$^+$, Mg$^{2+}$, Cu$^{2+}$, Zn$^{2+}$ et Al$^{3+}$, ou est un cation organique.

8. Procédé de fabrication d'un dispositif supercondensateur selon l'une quelconque des revendications 1 à 7 comprenant les étapes suivantes :

(i) Approvisionnement d'électrodes comportant ledit composite ou ledit ensemble de nanotubes alignés et parallèles, de séparateurs, de collecteurs de courant, de l'électrolyte et d'une enceinte ;
(ii) Soudage, de préférence à ultrasons, des collecteurs de courant sur les électrodes,
(iii) Assemblage des électrodes et séparateurs,
(iv) Soudage, de préférence à ultrasons, des collecteurs de courant des électrodes aux borniers de l'enceinte,
(v) Mise en place de l'assemblage électrodes/séparateurs dans l'enceinte boitier, sachant que les étapes (iv) et (v) peuvent être inversées,
(vi) Ajout et diffusion de l'électrolyte dans ladite enceinte,
(vii) Scellement de l'enceinte.

9. Procédé selon la revendication 8, dans lequel ledit électrolyte est un liquide ionique contenant un cation associé à un anion, ou une solution électrolytique contenant un sel dissous dans un solvant, ledit solvant pouvant être un solvant protique ou un solvant aprotique ou un mélange d'au moins un mélange protique avec au moins un solvant aprotique,

ledit solvant aprotique étant de préférence choisi parmi les alcanes halogénés tels que le dichlorométhane ; la diméthylformamide (DMF) ; les cétones tels que l'acétone ou la 2-butanone ; l'acétonitrile ; le tétrahydrofuranne (THF) ; la N-méthylpyrrolidone (NMP) ; le diméthyl sulfoxyde (DMSO) et leurs mélanges ; le carbonate de propylène le carbonate d'éthylène, le diméthylcarbonate et leurs mélanges, les lactones et notamment le $\gamma$-butyrolactone, et/ou
ledit liquide ionique étant de préférence sélectionné dans le groupe formé par :

- les liquides ioniques contenant des ions ammonium quaternaire, et notamment les ions 1-éthyl-3-méthyl imidazolium, 1-méthyl-3-propyl imidazolium, 1-méthyl-3-isopropyl imidazolium, 1-butyl-3-méthyl imidazolium, 1 éthyl-2, 3-diméthyl imidazolium, 1-éthyl-3,4-diméthyl imidazolium, N-propyl pyridinium, N-butyl pyridinium, N-tert-butyl pyridinium, N-tert-butanol-pentyl pyridinium, N-méthyl-N-propylpyrrolidinium, N-butyl-N-méthyl-pyrrolidinium, N-méthyl-N-pentyl pyrrolidinium, N-propoxyéthyl-N-méthyl pyrrolidinium, N-méthyl-N- propyl piperidinium, N-méthyl-N-isopropyl piperidinium, N-butyl-N-méthyl piperidinium, N-N-isobutylméthyl piperidinium, N-sec-butyl-N-méthyl piperidinium, N-méthoxy-N-éthylméthyl piperidinium, et N-éthoxyéthyl-N-méthyl piperidinium ;
- les liquides ioniques contenant des ions ammonium tels que les ions butyl-N-N-triméthyl ammonium, N-éthyl-N,N-diméthyl-N-propyl ammonium, N-butyl-N-éthyl-N,N-diméthyl ammonium, N,N,N-triméthyl ammonium, associés à tout anion tels que les anions tétrafluoroborate (BF$_4^-$) , hexafluorophosphate (PF$_6^-$) , bis (trifluorométhane-sulfonyl) amide (TFSI$^-$) ou bis (fluorosulfonyl) amides (FSI).

10. Procédé selon l'une quelconque des revendications 8 à 9, dans lequel ledit électrolyte comprend un liquide ionique comprenant

- au moins un cation sélectionné dans le groupe formé par les dérivés du pyridine, pyridazine, pyrimidine, pyrazine, imidazole, pyrazole, thiazole, oxazole, triazole, ammonium, pyrrolidine, pyrroline, pyrrole, et piperidine, et
- au moins un anion sélectionné dans le groupe formé par F$^-$, Cl$^-$, Br, I$^-$, NO$_3^-$, N(CN)$_2^-$, BF$_4^-$, ClO$_4^-$, PF$_6^-$, RSO$_3^-$, RCOO$^-$,
où R est un groupe alkyl ou phénol, (CF$_3$)$_2$PF$_4^-$, (CF$_3$)$_3$PF$_3$, (CF$_3$)$_4$PF$_2^-$, (CF$_3$)$_5$PF$^-$, (CF$_3$)$_6$P$^-$, (CF$_2$SO$_3^-$)$_2$, (CF$_2$CF$_2$SO$_3^-$)$_2$, (CF$_3$SO$_2^-$)$_2$N$^-$, CF$_3$CF$_2$(CF$_3$)$_2$CO$^-$, (CF$_3$SO$_2$)$_2$ CH$^-$, (SF$_5$)$_3$C, (CF$_3$SO$_2$)$_3$C, [O(CF$_3$)$_2$C$_2$(CF$_3$)$_2$O]$_2$PO$^-$, CF$_3$(CF$_2$)$_7$SO$_3^-$, 1-éthyl-3-méthymimidazole bis(trifluoro-méthylsulfonyl)imide ([EMIM][Tf$_2$N]) ;

ladite solution électrolytique comprenant de préférence, en plus d'un solvant, un électrolyte sous forme d'un sel dissous dans le solvant, sachant que dans ce cas

- l'anion de ce sel est avantageusement choisi parmi

○ les anions inorganiques tels que $F^-$, $Br$, $Cl^-$, $I$, $HCO_3^-$, $H_2PO_4^-$, $Cr_2O_4^{3-}$, $BF_4^-$, $PF_6^-$, ou $N(CN)_2^-$ ;

○ les anions organiques, de préférence sélectionnés dans le groupe formé par : $RSO_3^-$, $RCOO^-$ (où R est un groupe alkyl ou phényle, possiblement substitué) ; $(CF_3)_2PF_4$, $(CF_3)_3PF_3$, $(CF_3)_4PF_2^-$, $(CF_3)_5PF^-$, $(CF_3)_6P^-$, $(CF_2SO_3)_2$, $(CF_2CF_2SO_3^-)_2$, $(CF_3SO_2^-)_2N^-$, $CF_3CF_2(CF_3)_2CO^-$, $(CF_3SO_2^-)_2CH^-$, $(SF_5)_3C^-$, $(CF_3SO_2SO_2)_3C^-$, $[O(CF_3)_2C_2(CF_3)_2O]_2PO$, $CF_3(CF_2)_7SO_3^-$, bis(trifluoro-méthanesulfonyl) amide, bis(fluorosulfonyl) amide,

○ les anions polymériques,

○ les anions biologiques,

- et/ou le cation de ce sel est un cation métallique, de préférence sélectionné dans le groupe formé par $Li^+$, $Na^+$, $Mg^{2+}$, $Cu^{2+}$, $Zn^{2+}$ et $Al^{3+}$, ou est un cation organique.

11. Utilisation d'un composite comprenant des nanotubes de carbone verticalement alignés, appelés « VACNT », sur un substrat, ledit composite étant **caractérisé en ce qu'**il comprend du carbone additionnel désorganisé déposé sur la face extérieure des nanotubes, ou d'un ensemble de nanotubes de carbone alignés et parallèles obtenu à partir dudit composite par enlèvement des nanotubes dudit substrat, comme électrode pour supercondensateur.

**Patentansprüche**

1. Superkondensatorvorrichtung, **dadurch gekennzeichnet, dass** sie mindestens eine Elektrode umfasst, die umfasst

- einen Verbundwerkstoff, der vertikal ausgerichtete Kohlenstoffnanoröhren, "VACNT" genannt, auf einem Substrat umfasst, der Verbundwerkstoff **dadurch gekennzeichnet, dass** er zusätzlichen unorganisierten Kohlenstoff umfasst, der auf der Außenfläche der Nanoröhren abgeschieden ist, oder
- ein Ensemble ausgerichteter und paralleler Nanoröhren, erhalten aus einem Verbundwerkstof, der VACNT auf einem Substrat umfasst, wobei der Verbundwerkstoff zusätzlichen unorganisierten Kohlenstoff umfasst, der auf der Außenfläche der Nanoröhren abgeschieden ist, wobei das genannte Ensemble ausgerichteter und paralleler Nanoröhren durch Entfernen der Nanoröhren von dem Substrat erhalten wird.

2. Superkondensatorvorrichtung nach Anspruch 1, **dadurch gekennzeichnet, dass** ihre beiden Elektroden einen solchen Verbunfwerkstoff oder ein solches Ensemble von Nanoröhren umfassen.

3. Superkondensatorvorrichtung nach Anspruch 1, **dadurch gekennzeichnet, dass** der Verbundwerkstoff zwischen 10 % und 80 % zusätzlichen desorganisierten Kohlenstoff, bezogen auf die Masse der Kohlenstoffnanoröhren, enthält, und vorzugsweise minestens 30 %, und noch bevorzugter mindestens 50 % zusätzlichen desorganisierten Kohlenstoff enthält.

4. Superkondensatorvorrichtung nach Anspruch 2 oder 3, bei der die beiden Elektroden, durch einen Separator getrennt, in einem Gehäuse enthalten sind und die Vorrichtung außerdem einen Elektrolyten umfasst, der mindestens ein Anion, mindestens ein Kation und optional ein Lösungsmittel umfasst.

5. Vorrichtung nach einem der Ansprüche 1 bis 4, **dadurch gekennzeichnet, dass** der Superkondensator in der Lage ist, eine Energie von mindestens 0,8 Wh/m$^2$, vorzugsweise mindestens 1 Wh/m$^2$ und noch bevorzugter von mindestens 2 Wh/m$^2$ zu speichern für eine Leistung zwischen 0,01 und 1 kW/m$^2$.

6. Vorrichtung nach einem der Ansprüche 4 oder 5, **dadurch gekennzeichnet, dass** der Elektrolyt eine ionische Flüssigkeit ist, die ein mit einem Anion verbundenes Kation enthält, oder eine Elektrolytlösung, die ein in einem Lösungsmittel gelöstes Salz enthält, wobei das Lösungsmittel ein protisches Lösungsmittel oder ein aprotisches Lösungsmittel oder eine Mischung mindestens eines protischen mit mindestens einem aprotischen Lösungsmittel sein kann, wobei

das aprotische Lösungsmittel vorzugsweise ausgewählt wird aus halogenierten Alkanen wie Dichlormethan; Dimethylformamid (DMF); Ketonen wie Aceton oder 2-Butanon; Acetonitril; Tetrahydrofuran (THF); N-Methylpyrrolidon (NMP); Dimethylsulfoxid (DMSO) und Mischungen davon; Propylencarbonat, Ethylencarbonat, Dimethylcarbonat und deren Mischungen, Lactonen und insbesondere $\gamma$-Butyrolacton, und/oder die ionische Flüssigkeit vorzugsweise aus der Gruppe ausgewählt wird, die gebildet wird durch:

- ionische Flüssigkeiten, die quartäre Ammoniumionen enthalten, insbesondere die Ionen 1-Ethyl-3-methylimidazolium, 1-Methyl-3-propylimidazolium, 1-Methyl-3-isopropylimidazolium, 1-Butyl-3-methylimidazolium, 1- Ethyl-2,3-Dimethyl Imidazolium, 1-Ethyl-3,4-Dimethyl Imidazolium, N-Propyl Pyridinium, N-Butyl Pyridinium, N-Tert-Butyl Pyridinium, N-Tert-Butanol-Pentyl Pyridinium, N-Methyl - N-Propylpyrrolidinium, N-Butyl-N-methyl-pyrrolidinium, N-Methyl-N-pentylpyrrolidinium, N-Propoxyethyl-N-methylpyrrolidinium, N-Methyl-N-propylpiperidinium, N-Methyl-N-isopropylpiperidinium, N-Butyl-N-methylpiperidinium, N-N-Isobutylmethylpiperidinium, N-sec-Butyl-N-methylpiperidinium, N-Methoxy-N-ethylmethylpiperidinium und N-Ethoxyethyl-N-methylpiperidinium;

- ionische Flüssigkeiten, die Ammoniumionen enthalten, wie Butyl-N-N-trimethyl-Ammonium, N-Ethyl-N,N-Dimethyl-N-PropylAmmonium, N-Butyl-N-Ethyl-N,N-Dimethyl-Ammonium, N,N,N-Trimethylammonium, verbunden mit einem beliebigen Anion wie Tetrafluorborat ($BF_4^-$), Hexafluorphosphat ($PF_6^-$), bis(trifluor-methansulfonyl)amid (TFSI⁻) oder Bis(fluorsulfonyl)amid (FSI).

7. Vorrichtung nach einem der Ansprüche 4 bis 6, **dadurch gekennzeichnet, dass** der Elektrolyt eine ionische Flüssigkeit umfasst, die umfasst

- mindestens ein Kation, ausgewählt aus der Gruppe bestehend aus Derivaten von Pyridin, Pyridazin, Pyrimidin, Pyrazin, Imidazol, Pyrazol, Thiazol, Oxazol, Triazol, Ammonium, Pyrrolidin, Pyrrolin, Pyrrol und Piperidin, und
- mindestens ein Anion, ausgewählt aus der Gruppe bestehend aus F⁻, Cl⁻, Br⁻, I⁻, $NO_3^-$, $N(CN)_2^-$, $BF_4^-$, $ClO_4^-$, $PF_6^-$, $RSO_3^-$, RCOO⁻, wobei R ein Alkyl- or Phenolrest, $(CF_3)_2PF_4^-$, $(CF_3)_3PF_3$, $(CF_3)_4PF_2^-$, $(CF_3)_5PF^-$, $(CF_3)_6P^-$, $(CF_2SO_3^-)_2$, $(CF_2CF_2SO_3^-)_2$, $(CF_3SO_2^-)_2N^-$, $CF_3CF_2(CF_3)_2CO^-$, $(CF_3SO_2)_2$ CH⁻, $(SF_5)_3C$, $(CF_3SO_2)_3C$, $[O(CF_3)_2C_2(CF_3)_2O]_2PO^-$, $CF_3(CF_2)_7SO_3^-$, 1-Ethyl-3-methymimidazole bis(trifluoro-methylsulfonyl)imide ([EMIM][Tf$_2$N] ist;

wobei die Elektrolytlösung vorzugsweise zusätzlich zu einem Lösungsmittel einen Elektrolyten in Form eines im Lösungsmittel gelösten Salzes umfasst, wobei in diesem Fall:

- das Anion dieses Salzes vorteilhafterweise ausgewählt wird aus

-- anorganischen Anionen wie F⁻, Br⁻, Cl⁻, I, $HCO_3^-$, $H_2PO_4^-$, $Cr_2O_4^{3-}$, $BF_4^-$, $PF_6^-$, oder $N(CN)_2^-$ ;
-- organischen Anionen, vorzugsweise ausgewählt aus der Gruppe bestehend aus: $RSO_3^-$, RCOO⁻ (wobei R eine Alkyl- oder Phenylgruppe ist, möglicherweise substituiert); $(CF_3)_2PF_4$, $(CF_3)_3PF_3$, $(CF_3)_4PF_2^-$, $(CF_3)_5PF^-$, $(CF_3)_6P^-$, $(CF_2SO_3^-)_2$, $(CF_2CF_2SO_3^-)_2$, $(CF_3SO_2^-)_2N^-$, $CF_3CF_2(CF_3)_2CO^-$, $(CF_3SO_2^-)_2CH^-$, $(SF5)_3C^-$, $(CF_3SO_2SO_2)_3C^-$, $[O(CF_3)_2C_2(CF_3)_2O]_2PO$, $CF_3(CF_2)_7SO_3^-$, Bis(trifluoro-methanesulfonyl)amid, Bis(fluorosulfonyl)amid,
-- polymeren Anionen,
-- biologischen Anionen,

und/oder das Kation dieses Salzes ist ein Metallkation, vorzugsweise ausgewählt aus der Gruppe bestehend aus Li⁺, Na⁺, $Mg^{2+}$, $Cu^{2+}$, $Zn^{2+}$ und $Al^{3+}$, oder ist ein organisches Kation.

8. Verfahren zur Herstellung einer Superkondensatorvorrichtung nach einem der Ansprüche 1 bis 7, umfassend die folgenden Schritte:

(i) Bereitstellung von Elektroden, die diesen Verbundwerkstoff oder dieses Ensemble ausgerichteter und paralleler Nanoröhren umfassen, von Separatoren, Stromkollektoren, Elektrolyt und einer Umhüllung;
(ii) Schweißen, vorzugsweise mit Ultraschall, der Stromkollektoren auf die Elektroden,
(iii) Montage von Elektroden und Separatoren,
(iv) Schweißen, vorzugsweise mit Ultraschall, der Stromkollektoren der Elektroden an die Gehäuseklemmenblöcke,
(v) Installation der Elektroden-/Separatorbaugruppe im Gehäusegehäuse, wobei die Schritte (iv) und (v) umgekehrt werden können,
(vi) Zugabe und Diffusion des Elektrolyten in dem Gehäuse,
(vii) Versiegelung des Gehäuses.

9. Verfahren nach Anspruch 8, wobei der Elektrolyt eine ionische Flüssigkeit ist, die ein mit einem Anion verbundenes Kation enthält, oder eine Elektrolytlösung, die ein in einem Lösungsmittel gelöstes Salz enthält, wobei das Lösungsmittel ein protisches Lösungsmittel oder ein aprotisches Lösungsmittel oder eine Mischung mindestens eines protischen mit mindestens einem aprotischen Lösungsmittel sein kann, wobei

das aprotische Lösungsmittel vorzugsweise ausgewählt wird aus halogenierten Alkanen wie Dichlormethan; Dimethylformamid (DMF); Ketonen wie Aceton oder 2-Butanon; Acetonitril; Tetrahydrofuran (THF); N-Methylpyrrolidon (NMP); Dimethylsulfoxid (DMSO) und Mischungen davon; Propylencarbonat, Ethylencarbonat, Dimethylcarbonat und deren Mischungen, Lactonen und insbesondere $\gamma$-Butyrolacton, und/oder
die ionische Flüssigkeit vorzugsweise aus der Gruppe ausgewählt wird, die gebildet wird durch:

- ionische Flüssigkeiten, die quartäre Ammoniumionen enthalten, insbesondere 1-Ethyl-3-methylimidazolium, 1-Methyl-3-propylimidazolium, 1-Methyl-3-isopropylimidazolium, 1-Butyl-3-methylimidazolium, 1-Ethyl-2,3-Dimethyl Imidazolium, 1-Ethyl-3,4-Dimethyl Imidazolium, N-Propyl Pyridinium, N-Butyl Pyridinium, N-Tert-Butyl Pyridinium, N-Tert-Butanol-Pentyl Pyridinium, N-Methyl - N-Propylpyrrolidinium, N-Butyl-N-methyl-pyrrolidinium, N-Methyl-N-pentylpyrrolidinium, N-Propoxyethyl-N-methylpyrrolidinium, N-Methyl-N-propylpiperidinium, N-Methyl-N-isopropylpiperidinium, N-Butyl-N-methylpiperidinium, N-N-Isobutylmethylpiperidinium, N-sec-Butyl-N-methylpiperidinium, N-Methoxy-N-ethylmethylpiperidinium und N-Ethoxyethyl-N-methylpiperidinium;
- ionische Flüssigkeiten, die Ammoniumionen enthalten, wie Butyl-N-N-trimethyl-Ammonium, N-Ethyl-N,N-Dimethyl-N-PropylAmmonium, N-Butyl-N-Ethyl-N,N-Dimethyl-Ammonium, N,N,N-Trimethylammonium, verbunden mit einem beliebigen Anion wie Tetrafluorborat ($BF_4^-$), Hexafluorphosphat ($PF_6^-$), bis(trifluormethansulfonyl)amid ($TFSI^-$) oder Bis(fluorsulfonyl)amid (FSI) .

**10.** Verfahren nach irgendeinem der Ansprüche 8 bis 9, **dadurch gekennzeichnet, dass** der Elektrolyt eine ionische Flüssigkeit umfasst, die umfasst

- mindestens ein Kation, ausgewählt aus der Gruppe bestehend aus Derivaten des Pyridin, Pyridazin, Pyrimidin, Pyrazin, Imidazol, Pyrazol, Thiazol, Oxazol, Triazol, Ammonium, Pyrrolidin, Pyrrolin, Pyrrol und Piperidin, und
- mindestens ein Anion, ausgewählt aus der Gruppe bestehend aus $F^-$, $Cl^-$, $Br^-$, $I^-$, $NO_3^-$, $N(CN)_2^-$, $BF_4^-$, $ClO_4^-$, $PF_6^-$, $RSO_3^-$, $RCOO^-$, wobei R ein Alkyl- or Phenolrest ist, $(CF_3)_2PF_4^-$, $(CF_3)_3PF_3$, $(CF_3)_4PF_2^-$, $(CF_3)_5PF^-$, $(CF_3)_6P^-$, $(CF_2SO_3^-)2$, $(CF_2CF_2SO_3^-)_2$, $(CF_3SO_2^-)_2N^-$, $CF_3CF_2(CF_3)_2CO^-$, $(CF_3SO_2)_2$ $CH^-$, $(SF_5)_3C$, $(CF_3SO_2)_3C$, $[O(CF_3)_2C_2(CF_3)_2O]_2PO^-$, $CF_3(CF_2)_7SO_3^-$, 1-ethyl-3-methymimidazol bis(trifluoro-methylsulfonyl)imide ($[EMIM][Tf_2N]$;

wobei die Elektrolytlösung vorzugsweise zusätzlich zu einem Lösungsmittel einen Elektrolyten in Form eines im Lösungsmittel gelösten Salzes umfasst, wobei in diesem Fall:

- das Anion dieses Salzes vorteilhafterweise ausgewählt wird aus

-- anorganischen Anionen wie $F^-$, $Br^-$, $Cl^-$, $I$, $HCO_3^-$, $H_2PO_4^-$, $Cr_2O_4^{3-}$, $BF_4^-$, $PF_6^-$, oder $N(CN)_2^-$ ;
-- organischen Anionen, vorzugsweise ausgewählt aus der Gruppe bestehend aus: $RSO_3^-$, $RCOO^-$ (wobei R eine Alkyl- oder Phenylgruppe ist, möglicherweise substituiert); $(CF_3)_2PF_4$, $(CF_3)_3PF_3$, $(CF_3)_4PF_2^-$, $(CF_3)_5PF^-$, $(CF_3)_6P^-$, $(CF_2SO_3^-)_2$, $(CF_2CF_2SO_3^-)_2$, $(CF_3SO_2^-)_2N^-$, $CF_3CF_2(CF_3)_2CO^-$, $(CF_3SO_2^-)_2CH^-$, $(SF_5)_3C^-$, $(CF_3SO_2SO_2)_3C^-$, $[O(CF_3)_2C_2(CF_3)_2O]_2PO$, $CF_3(CF_2)_7SO_3^-$, Bis(trifluoro-methanesulfonyl)amid, Bis(fluorosulfonyl)amid,
-- polymeren Anionen,
-- biologischen Anionen,

- und/oder das Kation dieses Salzes ist ein Metallkation, vorzugsweise ausgewählt aus der Gruppe bestehend aus $Li^+$, $Na^+$, $Mg^{2+}$, $Cu^{2+}$, $Zn^{2+}$ und $Al^{3+}$, oder ist ein organisches Kation.

**11.** Verwendung eines Verbundstoffs, der vertikal ausgerichtete Kohlenstoff-Nanoröhren, genannt "VACNT", auf einem Substrat umfasst, wobei der Verbundstoff **dadurch gekennzeichnet ist, dass** er zusätzlichen unorganisierten Kohlenstoff umfasst, der auf der Außenfläche der Nanoröhren abgeschieden ist, oder ein Ensemble ausgerichteter und paralleler Kohlenstoff-Nanoröhren aus dem Verbundwerkstoff, durch Entfernung der Nanoröhren von dem Substrat gewonnen, als Elektrode für einen Superkondensator.

Claims

1. Supercapacitor device, **characterized in that** is comprises at least one electrode comprising

   - a composite comprising vertically aligned carbon nanotubes, called "VACNT", on a substrate, said composite being **characterized in that** it comprises additional disorganized carbon deposited on the exterior face of the nanotubes, or
   - a set of aligned and parallel carbon nanotubes, obtained from a composite comprising VACNT on a substrate, said composite comprising additional disorganized carbon deposited on the exterior face of the nanotubes, said set of aligned and parallel nanotubes having been obtained by removal of the nanotubes from said substrate.

2. Supercapacitor device according to claim 1, **characterized in that** its two electrodes comprise such a composite or such a set of nanotubes.

3. Supercapacitor device according to claim 1 or 2, **characterized in that** said composite comprises between 10 % and 80 % of additional disorganized carbon, relative to the mass of the carbon nanotubes, and comprises preferably at least 30 %, and more preferably at least 50 % of additional disorganized carbon.

4. Supercapacitor device according to claim 2 or 3, **characterized in that** the two electrodes are contained in an enclosure, separated by a separator, and said device further comprising an electrolyte which comprises at least one anion, at least one cation, and optionally a solvent.

5. Device according to any of claims 1 to 4, **characterized in that** said supercapacitor is capable of storing an energy of at least 0.8 Wh/m$^2$, preferably at least 1 Wh/m$^2$ and even more preferably at least 2 Wh/m$^2$ for a power comprised between 0,01 and 2 kW/m$^2$.

6. Device according to any of claims 4 to 5, **characterized in that** said electrolyte is an ionic liquid comprising a cation associated with an anion, or an electrolyte solution containing a salt dissolved in a solvent, said solvent possibly being a protic solvent or an aprotic solvent or a mixture of at least one protic mixture with at least one aprotic solvent,

   said aprotic solvent being preferably selected from halogenated alkanes such as dichloromethane; dimethylformamide (DMF); ketones such as acetone or 2-butanone; acetonitrile; tetrahydrofuran (THF); N-methylpyrrolidone (NMP); dimethyl sulfoxide (DMSO) and mixtures thereof; propylene carbonate, ethylene carbonate, dimethylcarbonate and their mixtures, lactones and in particular γ-butyrolactone, and/or
   said ionic liquid being preferably selected from the group formed by:

   - ionic liquids containing quaternary ammonium ions, and in particular 1 -ethyl-3-methyl imidazolium, 1 -methyl-3-propyl imidazolium, 1 -methyl-3- isopropyl imidazolium, 1 -butyl-3-methyl imidazolium ions, 1-ethyl-2,3-dimethyl imidazolium, 1-ethyl-3,4-dimethyl imidazolium, N-propyl pyridinium, N-butyl pyridinium, N-tert-butyl pyridinium, N-tert-butanol-pentyl pyridinium, N-methyl -N- propylpyrrolidinium, N-butyl-N-methyl-pyrrolidinium, N-methyl-N-pentyl pyrrolidinium, N-propoxyethyl-N-methyl pyrrolidinium, N-methyl-N-propyl piperidinium, N-methyl-N-isopropyl piperidinium , N-butyl-N-methyl piperidinium, N-N-isobutylmethyl piperidinium, N-sec-butyl-N-methyl piperidinium, N-methoxy-N-ethylmethyl piperidinium, and N-ethoxyethyl-N-methyl piperidinium;
   - ionic liquids containing ammonium ions such as butyl-N-N-trimethyl ammonium, N-ethyl-N,N-dimethyl-N-propyl ammonium, N-butyl-N-ethyl- N,N-dimethyl ammonium, N,N,N-trimethyl ammonium, associated with any anion such as tetrafluoroborate ($BF_4^-$), hexafluorophosphate ($PF_6^-$), bis (trifluoromethanesulfonyl) amide (TFSI$^-$) or bis (fluorosulfonyl) amides (FSI).

7. Device according to any of claims 4 to 6, **characterized in that** said electrolyte comprises an ionic liquid comprising

   - at least one cation selected from the group formed by pyridine derivatives, pyridazine, pyrimidine, pyrazine, imidazole, pyrazole, thiazole, oxazole, triazole, ammonium, pyrrolidine, pyrroline, pyrrole, and piperidine, and
   - at least one anion selected from the group formed by F$^-$, Cl$^-$, Br$^-$, I$^-$, $NO_3^{3-}$, $N(CN)^{2-}$, $BF_4^-$, $ClO_4^-$, $PF_6^-$, $RSO_3^{3-}$, RCOO$^-$,

   where is an alkyl or phenole group, $(CF_3)_2PF_4^-$, $(CF_3)_3PF_3$, $(CF_3)_4PF_2^-$, $(CF_3)_5PF^-$, $(CF_3)_6P^-$, $(CF_2SO_3^-)_2$, $(CF_2CF_2SO_3^-)_2$, $(CF_3SO_2^-)_2N^-$, $CF_3CF_2(CF_3)_2CO^-$, $(CF_3SO_2)_2$ CH$^-$, $(SF_5)_3C$, $(CF_3SO_2)_3C$,

$[O(CF_3)_2C_2(CF_3)_2O]_2PO^-$, $CF_3(CF_2)_7SO_3^-$, 1-ethyl-3-methymimidazole bis(trifluoro-methylsulfonyl)imide ([EMIM][Tf$_2$N];

said electrolytic solution comprising preferably, in addition to a solvent, an electrolyte in the form of a salt dissolved in the solvent, knowing that in this case

- the anion of this salt is advantageously chosen from

-- inorganic anions such as $F^-$, $Br^-$, $Cl^-$, I, $HCO_3^-$, $H_2PO_4^-$, $Cr_2O_4^{3-}$, $BF_4^-$, $PF_6^-$, ou $N(CN)_2^-$ ;
-- organic anions, preferably selected from the group formed by: $RSO_3^-$, $RCOO^-$ (where R is an alkyl or phenyl group, possibly substituted); $(CF_3)_2PF_4$, $(CF_3)_3PF_3$, $(CF_3)_4PF_2^-$, $(CF_3)_5PF^-$, $(CF_3)_6P^-$, $(CF_2SO_3^-)2$, $(CF_2CF_2SO_3^-)_2$, $(CF_3SO_2^-)_2N^-$, $CF_3CF_2(CF_3)_2CO^-$, $(CF_3SO_2^-)_2CH^-$, $(SF_5)_3C^-$, $(CF_3SO_2SO_2)_3C^-$, $[O(CF_3)_2C_2(CF_3)_2O]_2PO$, $CF_3(CF_2)_7SO_3^-$, bis (trifluoromethanesulfonyl) amide, bis(fluorosulfonyl) amide,
-- polymeric anions,
-- biological anions,

and/or the cation of this salt is a metal cation, preferably selected from the group formed by $Li^+$, $Na^+$, $Mg^{2+}$, $Cu^{2+}$, $Zn^{2+}$ et $Al^{3+}$, or is an organic cation.

8.  Method of manufacturing a supercapacitor device according to any one of claims 1 to 7 comprising the following steps:

(i) Providing of electrodes comprising said composite or said set of aligned and parallel nanotubes, separators, current collectors, electrolyte and an enclosure,
(ii) Welding, preferably by ultrasonic welding, of the current collectors on the electrodes,
(iii) Assembly of electrodes and separators,
(iv) Welding, preferably by ultrasonic welding, of the current collectors of the electrodes to the enclosure terminal blocks,
(v) Installation of the electrode/separator assembly in the housing enclosure, knowing that steps (iv) and (v) can be reversed),
(vi) Addition and diffusion of the electrolyte in said enclosure,
(vii) Sealing of the enclosure.

9.  Method according to claim 8, wherein said electrolyte is an ionic liquid comprising a cation associated with an anion, or an electrolyte solution containing a salt dissolved in a solvent, said solvent possibly being a protic solvent or an aprotic solvent or a mixture of at least one protic mixture with at least one aprotic solvent,

said aprotic solvent being preferably selected from halogenated alkanes such as dichloromethane; dimethylformamide (DMF); ketones such as acetone or 2-butanone; acetonitrile; tetrahydrofuran (THF); N-methylpyrrolidone (NMP); dimethyl sulfoxide (DMSO) and mixtures thereof; propylene carbonate, ethylene carbonate, dimethylcarbonate and their mixtures, lactones and in particular γ-butyrolactone, and/or
said ionic liquid being preferably selected from the group formed by:

- ionic liquids containing quaternary ammonium ions, and in particular 1 -ethyl-3-methyl imidazolium, 1 -methyl-3-propyl imidazolium, 1 -methyl-3- isopropyl imidazolium, 1 -butyl-3-methyl imidazolium ions, 1-ethyl-2,3-dimethyl imidazolium, 1-ethyl-3,4-dimethyl imidazolium, N-propyl pyridinium, N-butyl pyridinium, N-tert-butyl pyridinium, N-tert-butanol-pentyl pyridinium, N-methyl -N- propylpyrrolidinium, N-butyl-N-methyl-pyrrolidinium, N-methyl-N-pentyl pyrrolidinium, N-propoxyethyl-N-methyl pyrrolidinium, N-methyl-N-propyl piperidinium, N-methyl-N-isopropyl piperidinium , N-butyl-N-methyl piperidinium, N-N-isobutylmethyl piperidinium, N-sec-butyl-N-methyl piperidinium, N-methoxy-N-ethylmethyl piperidinium, and N-ethoxyethyl-N-methyl piperidinium;
- ionic liquids containing ammonium ions such as butyl-N-N-trimethyl ammonium, N-ethyl-N,N-dimethyl-N-propyl ammonium, N-butyl-N-ethyl- N,N-dimethyl ammonium, N,N,N-trimethyl ammonium, associated with any anion such as tetrafluoroborate ($BF_4^-$), hexafluorophosphate ($PF_6^-$), bis (trifluoromethanesulfonyl) amide (TFSI$^-$) or bis (fluorosulfonyl) amides (FSI).

10. Method according to any of claims 8 to 9, wherein said electrolyte comprises an ionic liquid comprising

- at least one cation selected from the group formed by pyridine derivatives, pyridazine, pyrimidine, pyrazine, imidazole, pyrazole, thiazole, oxazole, triazole, ammonium, pyrrolidine, pyrroline, pyrrole, and piperidine, and

- at least one anion selected from the group formed by $F^-$, $Cl^-$, $Br^-$, $I^-$, $NO_3^-$, $N(CN)_2^-$, $BF_4^-$, $ClO_4^-$, $PF_6^-$, $RSO_3^-$, $RCOO^-$,

where R is an alkyl or phenol group, $(CF_3)_2PF_4^-$, $(CF_3)_3PF_3$, $(CF_3)_4PF_2^-$, $(CF_3)_5PF^-$, $(CF_3)_6P^-$, $(CF_2SO_3^-)_2$, $(CF_2CF_2SO_3^-)_2$, $(CF_3SO_2^-)_2N^-$, $CF_3CF_2(CF_3)_2CO^-$, $(CF_3SO_2)_2$ $CH^-$, $(SF_5)_3C$, $(CF_3SO_2)_3C$, $[O(CF_3)_2C_2(CF_3)_2O]_2PO^-$, $CF_3(CF_2)_7SO_3^-$, 1-ethyl-3-methymimidazole bis(trifluoro-methylsulfonyl)imide ([EMIM] [Tf$_2$N] ;
said electrolytic solution comprises, in addition to a solvent, an electrolyte in the form of a salt dissolved in the solvent, knowing that in this case

- the anion of this salt is advantageously chosen from

-- inorganic anions such as $F^-$, $Br^-$, $Cl^-$, $I$, $HCO_3^-$, $H_2PO_4^-$, $Cr_2O_4^{3-}$, $BF_4^-$, $PF_6^-$, or $N(CN)_2$,
-- organic anions, preferably selected from the group formed by: $RSO_3^-$, $RCOO^-$ (where R is an alkyl or phenyl group, possibly substituted); $(CF_3)_2PF_4$, $(CF_3)_3PF_3$, $(CF_3)_4PF_2^-$, $(CF_3)_5PF^-$, $(CF_3)_6P^-$, $(CF_2SO_3^-)_2$, $(CF_2CF_2SO_3^-)_2$, $(CF_3SO_2^-)_2N^-$, $CF_3CF_2(CF_3)_2CO^-$, $(CF_3SO_2^-)_2CH^-$, $(SF5)_3C^-$, $(CF_3SO_2SO_2)_3C^-$, $[O(CF_3)_2C_2(CF_3)_2O]_2PO$, $CF_3(CF_2)_7SO_3^-$, bis (trifluoromethanesulfonyl) amide, bis(fluorosulfonyl) amide,
-- polymeric anions,
-- biological anions,

and/or the cation of this salt is a metal cation, preferably selected from the group formed by $Li^+$, $Na^+$, $Mg^{2+}$, $Cu^{2+}$, $Zn^{2+}$ et $Al^{3+}$, or is an organic cation.

11. Use of a composite comprising vertically aligned carbon nanotubes, called "VACNT", on a substrate, said composite being **characterized in that** it comprises additional disorganized carbon deposited on the exterior face of the nanotubes, or of a set of aligned and parallel carbon nanotubes, obtained from said composite by removal of said nanotubes from said substrate, as an electrode for supercapacitor.

Figure 1

Figure 2(a)

Figure 2(b)

Figure 2(c)

Figure 2(d)

Figure 3(a)

Figure 3(b)

Figure 3(c)

Figure 3(d)

Figure 5

Figure 6(a)

Figure 6(b)

Figure 4(a)

Figure 4(b)

Figure 4(c)

Figure 4(d)

Figure 7

Figure 8(a)

Figure 8(b)

## Figure 9 (a)

## Figure 9(b)

Figure 12(a)

Figure 12(b)

Figure 12(c)

Figure 11(a)

Figure 11(b)

Figure 11(c)

Figure 11(d)

Figure 13

Figure 14

Figure 15

Figure 16

Figure 17

Figure 18

● Carbone Active (Système commercial)
▲ VACNT 94μm et 58%
◆ Carbone Activé (Pouch-Cell)

Figure 19(a)                    Figure 19(b)

Figure 20

Figure 21(a)                    Figure 21(b)

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03038846 A
- WO 2007062126 A
- US 20090290288 A
- WO 2012004317 A
- WO 2015071408 A
- EP 2591151 A
- EP 1515911 A
- FR 3013061
- WO 2004000727 A

**Littérature non-brevet citée dans la description**

- **W. GU ; G. YUSHIN.** Review of nanostructured carbon material for electrochemcial capacitor applications : advantages and limitations of activated carbon, carbide-derived carbon, zeolite-templated carbon, carbon aerogels, carbon nanotubes, oinon-like carbon, and graphene. *WIRE Energy Environ,* 2013
- **R. SEMAN et al.** Highly efficient growth of vertically aligned carbon nanotubes on Fe-Ni base métal alloys foils for supercapacitors. *Adv. Nat. Sci. : Nanosci. Nanotechnol.,* 2016, vol. 7
- **VLAD et al.** Carbon Redox-Polymer-Gel Hybrid Super-capacitors. *Sci. Rep.,* 2016, vol. 6, 22194
- Nanocomposites polythiophènes / nanotubes de carbone alignés : Elaboration, caractérisations et applications aux supercondensateurs en milieu liquide ionique. **SÉBASTIEN LAGOUTTE.** thèse de doctorat. Université de Cergy-Pontoise, 2010
- Matériaux nanostructurés polymères conjugués/nanotubes de carbone verticalement alignés pour la réalisation de supercondensateurs. **MARINA PORCHER.** thèse de doctorat. Université de Tours, 2016
- **S. LAGOUTTE et al.** Poly(3-methylthiophene)/Vertically Aligned Multi-walled Carbon Nanotubes : Electrochemical Synthesis, Characterizations and Electrochemical Storage Properties in Ionic Liquids. *Electrochimica Acta,* 2014, vol. 130, 754-765
- **S. YASUDA et al.** Existence and Kinetics of Graphitic Carbonaceous Impurities in Carbon Nanotube Forests to Assess the Absolute Purity. *Nano Letters,* 2009, vol. 9 (2), 769-773
- **BROWN et al.** Electrochemical Charge Storage Properties of Vertically Aligned Carbon Nanotube Films: Effects of Thermal Oxidation. *The Journal of Physical Chemistry,* 2012, 19526-19534
- **W. LU et al.** High performance electrochemical capacitors from aligned carbon nanotube électrodes and ionic liquid electrolytes. *J. Power Sources,* 2009, vol. 189 (2), 1270-1277
- **G. ATTHIPALLI et al.** Electrochemical characterization of carbon nanotube forest grown on copper foi! using transition métal catalysts. *Thin Solid Films,* 2011, vol. 520, 1651-1655
- **R. REIT et al.** Growth time performance dependence of vertically aligned carbon nanotube supercapacitors grown on aluminum substrates. *Electrochimica Acta,* 2013, vol. 91, 96-100
- **S. DÖRFLER et al.** High power supercap électrodes based on vertically aligned carbon nanotubes on aluminum. *J. Power Sources,* 2013, vol. 227, 218-228
- **S.H. JO et al.** Corrélation of field émission and surface microstructure of vertically aligned carbon microtubes. *Applied Physics Letters,* 2004, vol. 84 (3), 413-415
- **S. REICH ; C. THOMSEN.** Raman spectroscopy of graphite. *Phil. Trans. R. Soc. Lond,* 2004, vol. 1 (362), 2271-2288
- **A. FERRARI.** Raman spectroscopy of graphene and graphite : Disorder, electron-phonon coupling doping and nonadiabatic effects. *Solid State Communications,* 2007, vol. 143, 47-57
- Mécanismes de croissance de nanotubes de carbone alignés : relation catalyseur - nanotube. **C. CASTRO.** thèse de doctorat. Université de Paris XI (Orsay), 2009
- **F TUINSTRA ; JL KOENIG.** Raman Spectrum of Graphite. *J. Chem. Phys.,* 1970, vol. 53, 1126-1130
- **T JAWHARI et al.** Raman spectroscopic characterization of some commercially available carbon black materials. *Carbon,* 1995, vol. 33, 1561-1565
- **YC CHOI et al.** Novel Method of Evaluating the Purity of Multiwall Carbon Nanotubes Using Raman Spectroscopy. *J. Nanomater,* 2013, vol. 2013, 1-6
- **AC FERRARI ; J ROBERTSON.** Resonant Raman spectroscopy of disordered, amorphous, and diamondlike carbon. *Phys. Rev. B,* 2001, vol. 64

- **SADEZKI et al.** Raman Microspectroscopy of Soot and Related Carbonaceous Materials: Spectral Analysis and Structural Information. *Carbon,* 2005, vol. 43, 1731-1742

- **CASTRO et al.** *Carbon,* 2013, vol. 61, 581-594